# EUROPÄISCHE PATENTSCHRIFT

(11) **EP 2 567 989 B1**
(45) Veröffentlichungstag und Bekanntmachung des Hinweises auf die Patenterteilung: **13.07.2016**
(21) Anmeldenummer: 12188875.4
(22) Anmeldetag: 17.05.2010
(51) Int. Cl.: C08F 220/34, C08F 220/56, C08F 220/58

(54) **HYDROPHOB ASSOZIIERENDE COPOLYMERE**
HYDROPHOBIC ASSOCIATING COPOLYMERS
COPOLYMÈRE À ASSOCIER À UN HYDROPHOBE

(30) Priorität: 20.05.2009 EP 09160799
(43) Veröffentlichungstag der Anmeldung: 13.03.2013
(62) Teilanmeldung aus: 10719349.2
(73) Patentinhaber: BASF SE, 67056 Ludwigshafen am Rhein (DE)
(72) Erfinder: Reichenbach-Klinke, Roland, 83278 Traunstein (DE); Pfeuffer, Thomas, 97437 Haßfurt (DE); Schmidt, Kati, 200120 Pudong New District, Shanghai (CN); Ostrowski, Thomas, 68199 Mannheim (DE); Leyrer, Reinhold J., 67125 Dannstadt-Schauernheim (DE); Fogel, Yulia, 48153 Münster (DE); Friedrich, Stefan, 84518 Garching (DE); Gaeberlein, Peter, 4054 Basel (CH); Orleans, Andrea, 83308 Trostberg (DE); Schuhbeck, Manfred, 83278 Traunstein (DE); Guzmann, Marcus, 82541 Münsing (DE); Rösch, Markus, 55276 Oppenheim (DE); Langlotz, Björn, 83308 Trostberg (DE)
(74) Vertreter: BASF IP Association

(56) Entgegenhaltungen:
- EP-A2- 1 069 139
- DE-C1- 3 925 220

## Beschreibung

Die vorliegende Erfindung betrifft die Verwendung wasserlöslicher, hydrophob assoziierender Copolymere, welche neuartige hydrophob assoziierende Monomere enthalten, zur Erschließung, Ausbeutung und Komplettierung unterirdischer Erdöl- und Erdgaslagerstätten, insbesondere zur tertiären Erdölförderung. Die Monomere umfassen eine ethylenisch ungesättigte. Gruppe sowie eine Polyethergruppe mit Blockstruktur aus einem hydrophilen Polyalkylenoxidblock, welcher im Wesentlichen aus Ethylenoxidgruppen besteht, und einem terminalen, hydrophoben Polyalkylenoxidblock, welcher aus Alkylenoxiden mit mindestens 4 Kohlenstoffatomen, bevorzugt mindestens 5 Kohlenstoffatomen besteht.

Wasserlösliche, verdickend wirkende Polymere werden in vielen Bereichen der Technik eingesetzt, beispielsweise im Bereich der Kosmetik, in Lebensmitteln, zur Herstellung von Reinigungsmitteln, Druckfarben, Dispersionsfarben oder bei der Erdölförderung.

Es sind viele chemisch unterschiedliche Klassen von Polymeren bekannt, welche als Verdicker eingesetzt werden können. Eine wichtige Klasse verdickend wirkender Polymere sind die sogenannten hydrophob assoziierenden Polymere. Hierunter versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, durch das das Medium verdickt wird.

EP 705 854 A1 DE 100 37 629 A1 und DE 10 2004 032 304 A1 offenbaren wasserlösliche, hydrophob assoziierende Copolymere und deren Verwendung, beispielsweise im Bereich der Bauchemie. Die beschriebenen Copolymere umfassen saure Monomere wie beispielsweise Acrylsäure, Vinylsulfonsäure, Acrylamidomethylpropansulfonsäure, basische Monomere wie Acrylamid, Dimethylacrylamid oder kationische Gruppen umfassenden Monomeren, wie beispielsweise Ammoniumgruppen aufweisende Monomere. Derartige Monomere verleihen den Polymeren die Wasserlöslichkeit. Als hydrophob assoziierende Monomere enthalten die offenbarten Copolymere jeweils Monomere des nachfolgenden Typs: H₂C=C(R^{x})-COO-(-CH₂-CH₂-O-)_{q}-R^{y} oder auch H₂C=C(R^{x})-O-(-CH₂-CH_{z}-O-)_{q}-R^{y} wobei R^{x} typischerweise für H oder CH₃ und R^{y} für einen größeren Kohlenwasserstoffrest steht, typischerweise für Kohlenwasserstoffreste mit 8 bis 40 Kohlenstoffatomen. In den Schriften genannt sind beispielsweise längere Alkylgruppen oder auch eine Tristyrylphenylgruppe.

Eine weitere wichtige Klasse hydrophob assoziierender Copolymere sind alkalilösliche Dispersionen, wie sie beispielsweise von EP 13 836 A1 oder WO 2009/019225 offenbart sind. Derartige Dispersionen umfassen einerseits saure Monomere, insbesondere Acrylsäure, die bereits genannten hydrophob assoziierenden Monomere sowie nicht hydrophile Monomere, wie beispielsweise Alkylacrylate. Derartige Copolymere liegen im sauren pH-Bereich als Dispersion vor, bilden aber im alkalischen pH-Bereich eine Lösung und entfalten so ihre verdickende Wirkung.

Polymere, welche Polyethylenoxid-Blöcke, Blöcke aus höheren Alkylenoxiden sowie zusätzlich ethylenisch ungesättigte Gruppen aufweisen, sind auch aus anderen Bereichen der Technik bekannt.

WO 2004/044035 A1 offenbart Polyoxyalkylen-Blockcopolymere mit einem Block aus Polystyroloxid, welche als Emulgatoren zur Herstellung von Dispersionen eingesetzt werden können. In den Beispielen werden Verbindungen offenbart, bei denen Allylalkohol oder Hydröxybutylvinylether zunächst mit einer Polystyroloxidgruppe und anschließend mit einer Polyethylenoxidgruppe als terminaler Gruppe versehen wird. Die terminale Gruppe kann optional noch weiter funktionalisiert werden, beispielsweise mit Säuregruppen. Das beschriebene Blockcopolymer wird zur Herstellung von Styrol-Acrylat-Dispersionen eingesetzt.

WO 2004/026468 A1 offenbart Blockcopolymere aus einem Alkylenoxid-Block, einem Block aus Glycidylethern sowie einem Alkylenoxid-Block, wobei die Blockcopolymere eine ethylenisch ungesättigte Kopfgruppe aufweisen. Die terminale Gruppe kann zusätzlich mit Säuregruppen funktionalisiert sein. Die Blockcopolymere werden als polymerisierbare Emulgatoren verwendet. Die Verwendung zur Herstellung wasserlöslicher, hydrophob assoziierender Copolymere ist nicht erwähnt.

EP 1 069 139 A2 offenbart wässrige Dispersionen, welche durch Polymerisation ethylenisch ungesättigter wasserunlöslicher Verbindungen in Gegenwart eines wasserlöslichen Allyl- oder Vinylethers erhalten werden. Die Allyl- bzw. Vinytether weisen eine Polyalkylenoxidgruppe auf, welche aus C₂- bis C₄-Alkylenoxiden gebildet wird, wobei zwingend Ethylenoxideinheiten vorhanden sein müssen. Die Alkylenoxideinheiten können statistisch oder blockweise angeordnet werden, und die Polyalkylenoxidgruppe kann H oder eine C₁- bis C₄-Gruppe als terminale Gruppe aufweisen. Die Beispiele nennen konkret Polyethylenoxid-b-polypropylenoxid-monobutylvinylether.

JP 2001-199751 A offenbart die Herstellung eines Dispergiermittels für Zement: Hierbei wird Maleinsäureanhydrid mit einem Makromonomer copolymerisiert. Bei dem Makromonomer handelt es sich um ein Polyoxyalkylen-Blockcopolymer aus einem Polyethylenoxid-Block und einem Block aus einem Alkylenoxid ausgewählt aus der Gruppe von Propylenoxid, Butylenoxid oder Styroloxid, wobei die terminalen OH-Gruppen mit einer C₂- bis C₅-Alkenylgruppe bzw. mit einer C₁- bis C₅-Alkylgruppe verethert sind.

JP 2000-119699 A offenbart ein Hilfsmittel zum Deinking bei der Wiederaufarbeitung von Altpapier. Hierzu wird ein Polyoxyalkylen-Blockcopolymer eingesetzt, welches eine terminale C₈- bis C₂₄-Alkyl- bzw. Alkenylgruppe aufweist, die mit einem Ethylenoxid-Propylenoxid-Block, einem Polyethylenoxidblock sowie einem Block aus Propylenoxid oder höheren Alkylenoxiden verbunden ist. Die Herstellung von Polymeren ausgehend von diesem Blockcopolymer wird nicht beschrieben.

Es ist bekannt, hydrophob assoziierende Copolymere im Bereich der Erdölförderung, insbesondere zur tertiären Erdölförderung (Enhanced Oil Recovery, EOR) einzusetzen. Einzelheiten zur Verwendung hydrophob assoziierender Copolymere zur tertiären Erdölförderung sind beispielsweise im Übersichtsartikel von Taylor, K.C. und Nasr-El-Din, H.A. in J. Petr. Sci. Eng. 1998, 19, 265-280 beschrieben.

Zu den Techniken der tertiären Erdölförderung gehört das so genannte "Polymerfluten". Eine Erdöllagerstätte ist kein unterirdischer "Erdölsee", sondern das Erdöl ist in winzigen Poren des erdölführenden Gesteins festgehalten. Der Durchmesser der Hohlräume in der Formation beträgt üblicherweise nur wenige Mikrometer. Zum Polymerfluten presst man durch Injektionsbohrungen eine wässrige Lösung eines verdickend wirkenden Polymers in eine Erdöllagerstätte ein. Durch das Einpressen der Polymerlösung wird das Erdöl durch die besagten Hohlräume in der Formation von der Injektionsbohrung ausgehend in Richtung der Produktionsbohrung gedrückt, und das Erdöl wird über die Produktionsbohrung gefördert. Wichtig für diese Anwendung ist es, dass die wässrige Polymerlösung keinerlei Gelpartikel enthält. Bereits kleine Gelpartikel mit Dimensionen im Mikrometerbereich können die feinen Poren in der Formation verstopfen und somit die Erdölförderung zum Erliegen bringen. Hydrophob assoziierende Copolymere zur tertiären Erdölförderung sollten daher einen möglichst geringen Anteil an Gelpartikeln aufweisen.

Die oben genannten Monomere H₂C=C(R^{x})-COO-(-CH₂-CH₂-O-)_{q}-R^{y} und H₂C=C(R^{x})-O-(-CH₂-CH₂-O-)_{q}-R^{y} werden üblicherweise mittels eines zweistufigen Verfahrens hergestellt. In einer ersten Stufe wird ein Alkohol R-OH ethoxyliert, wobei ein ethoxylierter Alkohol der allgemeinen Formel HO-(-CH₂CH₂-O-)_{q}-R^{y} erhalten wird. Dieser kann in einer zweiten Stufe mit (Meth)acrylsäureanhydrid oder Acetylen zu den genannten Monomeren umgesetzt werden. Als Nebenprodukt der ersten Stufe (d.h. der Ethoxylierung des Alkohols) entsteht in geringen Mengen Polyethylenoxid HO-(-CH₂-CH₂-O)_{q}-H. In der zweiten Stufe können hieraus die difunktionelle Moleküle H₂C=C(R^{x})-COO-(-CH₂-CH₂-O-)_{q}-OC-C(R^{x})=CH₂ bzw. H₂C=C(R^{x})-O-(-CH₂-CH₂-O-)_{q}-C(R^{x})=CH₂ gebildet werden. Da eine Aufreinigung überaus aufwändig ist, werden diese Nebenprodukte üblicherweise nicht abgetrennt. Derartige difunktionelle Moleküle wirken vernetzend führen daher im Zuge einer Polymerisation zur Bildung vernetzter Produkte. Hierdurch weisen die gebildeten Polymere zwangsläufig gewisse Gelanteile auf, die bei der Verwendung der Polymere für EOR äußerst störend sind. Weiterhin ist es aus wirtschaftlichen Gründen ohnehin wünschenswert, ein möglichst einfaches Verfahren zur Herstellung der Monomere bereit zu stellen.

Aufgabe der Erfindung war es daher, hydrophob assoziierende Copolymere mit geringen Gelanteilen bereitzustellen und zur Erschließung. Ausbeutung und Komplettierung unterirdischer Erdöl- und Erdgaslagerstätten einzusetzen.

Dementsprechend wurde die Verwendung von wasserlöslichen hydrophob assoziierenden Copolymeren bei der Erschließung, Ausbeutung und Komplettierung unterirdischer Erdöl- und Erdgaslagerstätten gefunden, wobei die Copolymere mindestens
(a) 0,1 bis 12 Gew.-% mindestens eines monoethylenisch ungesättigten, hydrophob assoziierenden Monomers (a), sowie
(b) 70 Gew.-% bis 99,9 Gew.-% mindestens zweier davon verschiedener, monoethylenisch ungesättigter, hydrophiler Monomere (b) umfassen, und es sich bei den Monomeren (b) um mindestens
   - mindestens ein neutrales hydrophiles Monomer (b1), und
   - mindestens ein hydrophiles anionisches Monomer (b2) handelt, welches mindestens eine saure Gruppe ausgewählt aus der Gruppe von -COOH,-SO₃H oder -PO₃H₂ bzw. deren Salze umfasst,
   wobei die Mengenangaben jeweils auf die Gesamtmenge aller Monomere im Copolymer bezogen sind, und es sich bei mindestens einem der Monomere (a) um ein Monomer der allgemeinen Formel (I)

   H₂C=C(R¹)-R⁴-O-(-CH₂-CH(R²)-O-)ₖ-(-CH₂-CH(R³)-O-)ᵢ-R⁵ (I)

   handelt, wobei die Einheiten -(-CH₂-CH(R²)-0-)ₖ und -(-CH₂-CH(R³)-O-)ᵢ in Blockstruktur in der in Formel (I) dargestellten Reihenfolge angeordnet sind und die Reste und Indices die folgende Bedeutung haben:
   - k:: eine Zahl von 10 bis 150,
   - l:: eine Zahl von 5 bis 25,
   - R¹:: H oder Methyl,
   - R²:: unabhängig voneinander H, Methyl oder Ethyl, mit der Maßgabe, dass es sich bei mindestens 50 mol % der Reste R² um H handelt,
   - R³:: unabhängig voneinander ein Kohlenwasserstoffrest mit mindestens 2 Kohlenstoffatomen oder eine Ethergruppe der allgemeinen Formel -CH₂-O-R^{2'}, wobei R^{2'} für einen Kohlenwasserstoffrest mit mindestens 2 Kohlenstoffatomen steht,
   - R⁴:: eine Einfachbindung oder eine zweiwertige, verknüpfende Gruppe, ausgewählt aus der Gruppe von-(CnH₂ₙ)- [R^{4a}], -O-(CₙH_{2n'})- [R^{4b}] und -C(O)-O-(C_{n"}H_{2n"})- [R^{4c}], wobei n, n' und n" jeweils für eine natürliche Zahl von 1 bis 6 steht,
   - R⁵:: H oder ein Kohlenwasserstoffrest mit 1 bis 30 C-Atomen.

In einer bevorzugten Ausführungsform der Erfindung handelt es sich um die Verwendung der Copolymere zur tertiären Erdölförderung, wobei man eine wässrige Formulierung der besagten Copolymere in einer Konzentration von 0,01 bis 5 Gew.-% durch mindestens eine Injektionsbohrung in eine Erdöllagerstätte eingepresst und der Lägerstätte durch mindestens eine Produktionsbohrung Rohöl entnimmt.

Zu der Erfindung ist im Einzelnen das Folgende auszuführen:
Bei den erfindungsgemäß verwendeten, hydrophob assoziierenden Copolymeren handelt es sich um wasserlösliche Copolymere, welche hydrophobe Gruppen aufweisen. In wässriger Lösung können die hydrophoben Gruppen mit sich selbst oder mit anderen hydrophobe Gruppen aufweisenden Stoffen assoziieren und verdicken durch diese Wechselwirkung das wässrige Medium.

Dem Fachmann ist bekannt, dass die Löslichkeit hydrophob assoziierende (Co)polymere in Wasser je nach der Art der verwendeten Monomere mehr oder weniger stark vom pH-Wert abhängig sein kann. Bezugspunkt für die Beurteilung der Wasserlöslichkeit soll daher jeweils der für den jeweiligen Einsatzzweck des Copolymers gewünschte pH-Wert sein. Ein Copolymer, welches bei einem bestimmten pH-Wert eine nicht ausreichende Löslichkeit für den vorgesehenen Einsatzzweck hat, kann bei einem anderen pH-Wert eine ausreichende Löslichkeit aufweisen. Der Begriff "wasserlöslich" umfasst insbesondere auch alkalilösliche Dispersionen von Polymeren, d.h. Polymere, welche im sauren pH-Bereich als Dispersionen vorliegen und sich erst im alkalischen pH-Bereich in Wasser lösen und ihre verdickende Wirkung entfalten.

Im Idealfalle sollten die verwendeten Copolymere in beliebigem Verhältnis mit Wasser mischbar sein. Erfindungsgemäß ist es aber ausreichend, wenn die Copolymere, zumindest bei der gewünschten Einsatzkonzentration und beim gewünschten pH wasserlöslich sind. Im Regelfalle sollte die Löslichkeit in Wasser bei Raumtemperatur mindestens 20 g/l, bevorzugt mindestens 50 g/l und besonders bevorzugt mindestens 100 g/l betragen.

Die hydrophob assoziierenden Gopolymere umfassen neben den bereits erwähnten hydrophoben Gruppen daher hydrophile Gruppen in einer solchen Menge, dass die geschilderte Wasserlöslichkeit zumindest im für die jeweilige Anwendung vorgesehenen pH-Bereiche gewährleistet ist.

### Monomer (a)

Das verwendete, hydrophob assoziierende Copolymer umfasst mindestens ein monoethylenisch ungesättigtes Monomer (a), welches dem Copolymer hydrophob assoziierende Eigenschaften verleiht und daher im Folgenden als hydrophob assoziierendes Monomer bezeichnet wird.

### Monomer (a) der Formel (I)

Erfindungsgemäß handelt es sich bei mindestens einem der monoethylenisch ungesättigten Monomere (a) um ein Monomer der allgemeinen Formel

H₂C=C(R¹)-R⁴-O-(-CH₂-CH(R²)-O-)ₖ-(-CH₂-CH(R³)-O-)ᵢ-R⁵ (1) .

Bei den Monomeren (a) der Formel (I) ist eine ethylenische Gruppe H₂C=C(R¹)- über eine zweiwertige, verknüpfende Gruppe -R⁴-O- mit einem Polyoxyalkylenrest mit Blockstruktur -(-CH₂-CH(R²)-O-)ₖ-(-CH₂-CH(R³)-O-)ᵢ₋R⁵ verbunden, wobei die beiden Blöcke -(-CH₂-CH(R²)-O-)ₖ und -(-CH₂-CH(R³-O-)ᵢ in der in Formel (I) dargestellten Reihenfolge angeordnet sind. Der Polyoxyalkylenrest weist entweder eine terminale OH-Gruppe oder eine terminale Ethergruppe -OR⁵ auf.

In der oben genannten Formel steht R¹ für H oder eine Methylgruppe.

R⁴ steht für eine Einfachbindung oder eine zweiwertige, verknüpfende Gruppe, ausgewählt aus der Gruppe von -(CₙH₂ₙ)- [Gruppe R^{4a}], -O-(C_{n'}H_{2n'})- [Gruppe R^{4b}]-und -C(O)-O-(C_{n"}H_{2n"})- [Gruppe R^{4c}]. In den genannten Formeln stehen n, n' und n" jeweils für eine natürliche Zahl von 1 bis 6. Mit anderen Worten gesagt handelt es sich bei der verknüpfenden Gruppe um geradkettige oder verzweigte aliphatische Kohlenwasserstoffgruppen mit 1 bis 6 Kohlenwasserstoffatomen, welche entweder direkt, über eine Ethergruppe -O- oder über eine Esterguppe -C(O)-O- mit der ethylenischen Gruppe H₂C=C(R¹)- verknüpft sind. Bevorzugt handelt es sich bei den Gruppen -(CₙH₂ₙ)-, -(C_{n'}H_{2n'})- und -(C_{n"}H_{2n"} um lineare aliphatische Kohlenwasserstoffgruppen.'

Bevorzugt handelt es sich bei der Gruppe R^{4a} um eine Gruppe ausgewählt aus -CH₂-,-CH₂-CH₂- und -CH₂-CH₂-CH₂-, besonders bevorzugt ist eine Methylengruppe -CH₂-.

Bevorzugt handelt es sich bei der Gruppe R^{4b} um eine Gruppe ausgewählt aus -O-CH₂-CH₂-, -O-CH₂-CH₂-CH₂- und -O-CH₂-CH₂-CH₂-CH₂-, besonders bevorzugt ist -O-CH₂-CH₂-CH₂-CH2-.

Bevorzugt handelt es sich bei der Gruppe R^{4c} um eine Gruppe ausgewählt aus -C(O)-O-CH₂-CH₂-, -C(O)O-CH(CH₃)=CH₂-, -C(O)O-CH₂-CH(CH₃)-, -C(O)O-CH₂-CH₂-CH₂-CH₂- und -C(O)O-CH₂-CH₂-CH₂-CH₂-CH₂-CH₂-, besonders bevorzugt sind -C(O)-O-CH₂-CH₂- und -C(O)O-CH₂-CH₂-CH₂-CH₂- und ganz besonders bevorzugt ist-C(O)-O-CH₂-CH₂-.

Besonders bevorzugt handelt es sich bei der Gruppe R⁴ um eine Gruppe R^{4a} oder R^{4b}, besonders bevorzugt um eine Gruppe R^{4b}.

Weiterhin besonders bevorzugt handelt es sich bei R⁴ um eine Gruppe ausgewählt aus -CH₂- oder -O-CH₂-CH₂-CH₂-CH₂-, ganz besonders bevorzugt ist -O-CH₂-CH₂-CH₂-CH₂-.

Die Monomere (I) weisen weiterhin einen Polyoxyalkylenrest auf, der aus den Einheiten -(-CH₂-CH(R²)-O-)ₖ und -(-CH₂-CH(R³)-O-)ᵢ besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Im Block -(-CH₂-CH(R²)-O-)ₖ stehen die Reste R² unabhängig voneinander für H, Methyl oder Ethyl, bevorzugt H oder Methyl mit der Maßgabe, dass es sich bei mindestens 50 mol % der Reste R² um H handelt. Bevorzugt handelt es sich bei mindestens 75 mol% der Reste R² um H, besonders bevorzugt bei mindestens 90 mol % und ganz besonders bevorzugt ausschließlich um H. Bei dem genannten Block handelt es sich also um einen Polyoxyethylenblock, der optional noch gewisse Anteile Propylenoxyd- und/oder Butylenoxideinheiten aufweisen kann, bevorzugt um einen reinen Polyoxyethylenblock.

Bei der Anzahl der Alkylenoxideinheiten k handelt es sich um eine Zahl von 10 bis 150, bevorzugt 12 bis 100, besonders bevorzugt 15 bis 80, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R³)-O-)ᵢ- stehen die Reste R³ unabhängig voneinander für Kohlenwasserstoffstoffreste von mindestens 2 Kohlenstoffatomen steht, bevorzugt mindestens 3 und besonders bevorzugt 3 bis 10 Kohlenstoffatomen. Es kann sich hierbei um einen aliphatischen und/oder aromatischen, linearen oder verzweigten Kohlenstoffrest handeln. Bevorzugt handelt es sich um aliphatische Reste.

Beispiele geeigneter Reste R³ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei den Resten R³ kann es sich weiterhin um Ethergruppen der allgemeinen Formel CH₂-O-R^{3'} handeln, wobei es sich bei R^{3'} um einen aliphatischen und/oder aromatischen, linearen oder verzweigten Kohlenwasserstoffrest mit mindestens 2 Kohlenstoffatomen, bevorzugt mindestens 3 und besonders bevorzugt 3 bis 10 Kohlenstoffatomen handelt. Beispiele für Reste R^{3'} umfassen n-Propyl, n-Butyl, n-Pentyl, n-Hexyl, 2-Ethylhexyl, n-Heptyl, n-Octyl, n-Nonyl n-Decyl oder Phenyl.

Bei dem Block -(-CH₂-CH(R³-O-)ᵢ- handelt es sich also um einen Block, der aus Alkylenoxideinheiten mit mindestens 4 Kohlenstoffatomen, bevorzugt mindestens 5 Kohlenstoffatomen und/oder Glycidylethern mit einer Ethergruppe von mindestens 2, bevorzugt mindestens 3 Kohlenstoffatomen besteht. Bevorzugt als Reste R³ sind die genannten Kohlenwasserstoffeste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten I handelt es sich um eine Zahl von 5 bis 25, bevorzugt 6 bis 20, besonders bevorzugt 8 bis 18, ganz besonders bevorzugt 10 bis 15 und beispielsweise ca. 12.

Bei dem Rest R⁵ handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei R⁵ um H, Methyl oder Ethyl, besonders bevorzugt um H oder Methyl und ganz besonders bevorzugt um H.

Bei den Monomeren der Formel (I) ist also eine terminale, monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxiddeinheiten, bevorzugt mindestens Pentenoxideinheiten oder Einheiten höherer Alkylenoxide wie beispielsweise Dodecenoxid aufgebaut ist. Der zweite Block weist eine terminale -OR⁵-Guppe, insbesondere eine OH-Gruppe auf. Im Gegensatz zu den aus dem Stand der Technik bekannten hydrophob assoziierenden Copolymeren muss die Endgruppe nicht mit einem Kohlenwasserstoffrest zum hydrophoben Assoziieren verethert sein, sondern der terminale Block -(-CH₂-CH(R³)-O-)ᵢ selbst mit den Resten R³ ist für das hydrophobe Assoziieren der unter Verwendung der Monomere (a) hergestellten Copolymere verantwortlich. Das Verethern ist nur eine.Option, welche vom Fachmann je nach den gewünschten Eigenschaften des Copolymers ausgewählt werden kann.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block -(-CH₂-CH(R²)-O-)ₖ noch geringe Mengen an Einheiten -CH₂-CH(R³)-O- und der zweite Block -(-CH₂-CH(R³)-O-)ₗ- geringe Mengen an Einheiten -CH₂-CH(R²)-O- aufweisen, wobei diese Einheiten aber nicht statistisch über den Block verteilt sind, sondern in der genannten Übergangszone angeordnet sind.

### Herstellung der Monomere (a) der Formel (I)

Die Herstellung der hydrophob assoziierenden Monomere (a) der Formel (I) kann nach dem Fachmann prinzipiell bekannten Methoden erfolgen.

Zur Herstellung der Monomere (a) geht man in einem bevorzugten Herstellverfahren von geeigneten monoethylenisch ungesättigten Alkoholen (III) aus, welche anschließend in einem zweistufigen Prozess alkoxyliert werden, so dass die erwähnte Blockstruktur erhalten wird. Man erhält Monomere (a) der Formel (I) mit R⁵ = H. Diese können optional in einem weiteren Verfahrensschritt verethert werden.

Die Art der zu verwendenden ethylenisch ungesättigten Alkohole (III) richtet sich hierbei insbesondere nach der Gruppe R⁴.

Sofern R⁴ für eine Einfachbindung steht, geht man von Alkoholen (III) der allgemeinen Formel H₂C=C(R¹)-O-(-CH₂-CH(R^{2'})-O-)_{d}-H (IIIa), wobei R¹ die oben definiert Bedeutung hat, R^{2'} für H und/oder CH₃, bevorzugt H und d für eine Zahl von 1 bis 5, bevorzugt 1 oder 2 steht. Beispiele derartiger Alkohole umfassen Diethyleriglykolvinylether H₂C=CH-O-CH₂-CH₂-O-CH₂CH₂-OH oder Dipropylenglykolvinylether H₂C=CH-O-CH₂-CH(CH₃)-O-CH₂-CH(CH₃)-OH, bevorzugt ist Diethylenglykolvinylether.

Zur Herstellung von Monomeren (a) bei denen R⁴ nicht für eine Einfachbindung steht, können Alkohole der allgemeinen Formel H₂C=C(R¹)-R⁴-OH (IIIa) oder bereits Alkoxygruppen aufweisende Alkoholen der Formel H₂C=C(R¹)-R⁴-O-(-CH₂-CH(R^{2'})-O-)_{d}-H (IIIb) eingesetzt werden, wobei R^{2'} und d die oben definierte Bedeutung haben, und R⁴ jeweils aus der Gruppe von R^{4a}, R^{ab} und R^{4c} gewählt wird.

Zur Herstellung der Monomere mit verkhnüpfender Gruppe R^{-4a} geht bevorzugt man von Alkoholen der Formel H₂C=C(R¹)=(CnH₂ₙ)-OH, insbesondere H₂C=CH-(CₙH₂ₙ)-OH aus oder Alkoholen der Formel H₂C=C(R¹)-O-(-CH₂-C_{H}(R²)-O-)_{d}-H, insbesondere solchen mit R¹ = H und R² = H und/oder CH₃ aus. Beispiele bevorzugter Alkohole umfassen. Allylalkohol H₂C=CH-CH₂-OH oder Isoprenol H₂C=C(CH₃)-CH₂-CH₂-OH.

Zur Herstellung der Monomere mit verknüpfender Gruppe R^{4b}, geht man von Vinylethern der Formel H₂C=C(R¹)-O-(C_{n'}-H_{2n'})-OH, bevorzugt H₂C=CH-O-(C_{n'}H_{2n'})-OH aus. Besonders bevorzugt kann ω-Hydroxybutylvinylether H₂C=CH-O=CH₂-CH₂-CH₂-CH₂-OH eingesetzt werden.
Zur Herstellung der Monomere mit verknüpfender Gruppe R^{4c} geht man von Hydroxyalkyl(meth)acrylaten der allgemeinen Formel H₂C=C(R¹)-C(O)-O-(C_{n"}H_{2n"})-OH, bevorzugt H₂C=C(R¹)-C(O)-O-(C_{n"}H_{2n"})-OH aus. Beispiele bevorzugter Hydroxyalkyl(meth)acrylate umfassen Hydroxyethyl(meth)acrylat H₂C=C(R¹)-C(O)-O-CH₂-CH₂-OH sowie Hydroxybutyl(meth)acrylat H₂C=C(R¹)-C(O)-O-CH₂-CH₂₋CH₂-CH₂-OH.

Die genannten Ausgangsverbindungen werden alkoxyliert, und zwar in einem zweistufigen Prozess zunächst mit Ethylenoxid, optional im Gemisch mit Proyplenoxid und/oder Butylenoxid und in einem zweiten Schritt mit Alkylenoxiden der allgemeinen Formeln (Xa) bzw. (Xb) 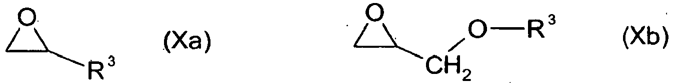 wobei R³ in (Xa) bzw. R^{3'} in (Xb) die eingangs definierte Bedeutung haben.

Die Durchführung einer Alkoxylierung einschließlich der Herstellung von Blockcopolymeren aus verschiedenen Alkylenoxiden ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate sowie die Orientierung von Alkylenoxideinheiten in einer Polyetherkette beeinflussen kann.

Die Alkoxylate können beispielsweise durch basenkatalysierte Alkoxylierung hergestellt werden. Dazu kann der als Ausgangsmaterial verwendete Alkohol in einem Druckreaktor mit Alkalihydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und ein einem ersten Schritt Ethylenoxid, optional im Gemisch mit Propylen- und/oder Butylenoxid Temperaturen von 60 bis 180°C, bevorzugt 130 bis 150°C schrittweise zugegeben. Die Zugabe erfolgt typischerweise innerhalb von 2 bis 5 h, ohne dass die Erfindung darauf beschränkt sein soll. Nach Beendigung der Zugabe lässt man das Reaktionsgemisch zweckmäßigerweise nachreagieren, beispielsweise für ½ h bis 1 h. In einem zweiten Schritt dosiert man anschließend-die Alkylenoxide mit mindestens 5 Kohlenstoffatomen schrittweise zu. Die Reaktiönstemperatur in der zweiten Stufe kann beibehalten werden oder auch verändert werden. Bewährt hat sich eine um ca. 10 bis 25°C niedrigere Reaktionstemperatur als in der ersten Stufe.

Die Alkoxylierung kann auch mittels Techniken vorgenommen werden, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der als Ausgangsmaterial verwendete Alkohol mit dem Katalysator versetzt werden, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben.

Die Alkoxylierung kann weiterhin auch säurekatalysiert vorgenommen werden. Bei den Säuren kann es sich um Brönstedt- oder Lewissäuren handeln. Zur Durchführung der Reaktion kann der als Ausgangsmaterial verwendete Alkohol mit dem Katalysator versetzt, die Mischung wie oben beschrieben entwässert werden und mit den Alkylenoxiden wie beschrieben umgesetzt werden. Am Ende der Reaktion kann der saure Katalysator durch Zugabe einer Base, beispielsweise KOH oder NaOH neutralisiert und bei Bedarf abfiltriert werden.

Für den Fachmann auf dem Gebiet der Polyalkylenoxide ist klar, dass die Orientierung der Kohlenwasserstoffeste R³ sowie gegebenenfalls R² von den Bedingungen bei der Alkoxylierung abhängen kann, beispielsweise vom zur Alkoxylierung gewählten Katalysator. Die Alkylenoxidgruppen können also sowohl in der Orientierung -(-CH₂-CH(R³)-O-) oder auch in inverser Orientierung -(-CH(R³)-CH₂-O-)- in das Monomer eingebaut werden. Die Darstellung in Formel (I) soll daher nicht als auf eine bestimmte Orientierung der Gruppen R² bzw R³ beschränkt angesehen werden.

Sofern die wie beschrieben erhaltenen Monomere (a) der Formel (I) mit einer terminalen OH-Gruppe (d.h. R⁵ = H) optional verethert werden sollen, kann dies mit dem Fachmann prinzipiell bekannten, üblichen Alkylierungsmitteln erfolgen, beispielsweise Alkylsulfaten. Zur Veretherung kann insbesondere Dimethylsulfat oder Diethylsulfat eingesetzt werden.

Das beschriebene bevorzugte-Herstellverfahren für die Monomere (I) unterscheidet sich auch für den Fall, dass R⁵ nicht H ist, grundlegend von der Synthese bekannter hydrophob assoziierender Monomere durch die Reihenfolge der Syntheseschritte: Während man bei den Syntheseverfahren zur Synthese der bekannten, eingangs erwähnten hydrophob assoziierenden Monomere von einem Alkohol ausgeht, diesen alkoxyliert und erst zum Schluss eine Verbindung mit ethylenisch ungesättigter Gruppe mit dem alkoxylierten Alkohol umsetzt, geht man bei der erfindungsgemäß beschriebenen Synthesevariante umgekehrt vor: Ausgangsmaterial ist eine ethylenisch ungesättigte Verbindung, welche alkoxyliert wird und anschließend optional verethert werden kann. Hierdurch wird die Bildung vernetzend wirkender Nebenprodukte vermieden, so dass die Herstellung von Copolymeren mit besonders niedrigem Gelanteil möglich ist.

### Weitere Monomere (a)

Neben den Monomeren (I) können optional noch von den Monomeren (I) verschiedene monoethylenische, hydrophob assoziierende Monomere (a) eingesetzt werden. Weitere Monomere (a) weisen die allgemeine Formel H₂C=C(R¹)-Y-Z auf, wobei R¹ für H oder Methyl, Z für eine terminale hydrophobe Gruppe und Y für eine verknüpfende hydrophile Gruppe steht. Dem Fachmann sind derartige Monomere bekannt, und er trifft gegebenenfalls eine geeignete Auswahl. Beispiele derartiger Monomere umfassen insbesondere Monomere der allgemeinen Formel H₂C=C(R¹)-COO-(-CH₂₋CH(R⁶)-O-)_{q}-R⁷ (IIa) oder H₂C=C(R¹)-O-(-CH₂-CH(R⁶)-O-)_{q}-R⁷ (IIb) wobei q für eine Zahl von 10 bis 150, bevorzugt 12 bis 100, besonders bevorzugt 15 bis 80, ganz besonders bevorzugt 20 bis 30 und beispielsweise ca. 25 steht, R¹ wie oben definiert ist und die Reste R⁶ unabhängig voneinander für H, Methyl oder Ethyl, bevorzugt H oder Methyl mit der Maßgabe, dass es sich bei mindestens 50 mol % der Reste R⁶ um H handelt. Bevorzugt handelt es sich bei mindestens 75 mol % der Reste R⁶ um H, besonders bevorzugt bei mindestens 90 mol % und ganz besonders bevorzugt ausschließlich um H. Bei dem Rest R⁷ handelt es sich um einen aliphatischen und/oder aromatischen, geradkettigen oder verzweigten Kohlenwasserstoffrest mit mindestens 6 Kohlenstoffatomen, insbesondere 6 bis 40 Kohlenstoffatomen, bevorzugt 8 bis 30 Kohlenstoffatomen. Beispiele umfassen n-Alkylgruppen wie n-Octyl-, n-Decyl- oder n-Dodecylgruppen, Phenylgruppen sowie insbesondere substituierte Phenylgruppen. Bei den Substitueriten an den Phenylgruppen kann es sich um Alkylgruppen, beispielsweise C₁- bis C₆-Alkylgruppen handeln, bevorzugt um Styrylgruppen. Besonders bevorzugt ist eine Tristyrylphenylgruppe. Die genannten hydrophob assoziierenden Mohomere der Formeln (IIa) bzw. (IIb) sind dem Fachmann prinzipiell bekannt.

### Mengen der Monomere (a)

Die Menge der monoethylenisch ungesättigten, hydrophob assoziierenden. Monomere (a) richtet sich nach dem jeweiligen Verwendungszweck des erfindungsgemäßen Copolymers und beträgt im Allgemeinen 0,1 bis 20 Gew.-% bezogen auf die Gesamtmenge aller Monomere im Copolymer, bevorzugt 0,1 bis 12 Gew.-%. In einer weiteren bevorzugten Ausführungsform beträgt die Menge 0,5 bis 20 Gew.-%, besonders bevorzugt 0,5 bis 12 Gew.-%.

Sofern neben den Monomeren (a) der Formel (I) noch weitere Monomere (a) eingesetzt werden, sollten die Monomere der Formel (I) im Regelfalle in einer Menge von mindestens 0,1 Gew.-% bezüglich der Summe aller Monomere im Copolymer eingesetzt werden, bevorzugt mindestens 0.5 Gew.-%. Weiterhin sollte der Anteil der Monomere der Formel (I) in der Regel zumindest 25 Gew.-% bezüglich der Menge aller Monomere (a) betragen, bevorzugt mindestens 50 Gew.-%, besonders bevorzugt mindestens 75 Gew.-% und besonders bevorzugt sollten als Monomere (a) nur Monomere der Formel (I) eingesetzt werden.

### Hydrophile Monomere (b)

Über die Monomere (a) hinaus umfasst das verwendete hydrophob assoziierende Copolymer mindestens zwei davon verschiedene, monoethylenisch ungesättigte, hydrophile Monomere (b).

Die hydrophilen Monomere (b) umfassen neben einer ethylenischen Gruppe eine oder mehrere hydrophile Gruppen. Diese verleihen dem erfindungsgemäßen Copolymer aufgrund ihrer Hydrophilie eine ausreichende Wasserlöslichkeit. Bei den hydrophilen Gruppen handelt es sich insbesondere um funktionelle Gruppen, welches O- und/oder N-Atome umfassen. Sie können darüber hinaus als Heteroatome insbesondere S-und/oder P-Atome umfassen.

Besonders bevorzugt sind die Monomere (b) in beliebigem Verhältnis mit Wasser mischbar, zur Ausführung der Erfindung ist es jedoch ausreichend, dass das erfindungsgemäße, hydrophob assoziierenden Copolymer die eingangs erwähnte Wasserlöslichkeit besitzt. Im Regelfalle sollte die Löslichkeit der Monomere (b) in Wasser bei Raumtemperatur mindestens 100 g/l, bevorzugt mindestens 200 g/l und besonders bevorzugt mindestens 500 g/l betragen.

Beispiele geeigneter funktioneller Gruppen umfassen Carbonylgruppen >C=O, Ethergruppe -O-, insbesondere Polyethylenoxidgruppen -(CH₂-CH₂-O-)ₙ-, wobei n bevorzugt für eine Zahl von 1 bis 200 steht, Hydroxygruppen -OH, Estergruppen-C(O)O-, primäre, sekundäre oder tertiäre Aminogruppen, Ammoniumgruppen, Amidgruppen -C(O)-NH-, Carböxamidgruppen -C(O)-NH₂ oder saure Gruppen wie Carboxylgruppen -COOH; Sulfonsäuregruppen -SO₃H, Phosphonsäuregruppen-PO₃H₂ oder Phosphorsäuregruppen -OP(OH)₃.

Beispiele bevorzugter funktioneller Gruppen umfassen Hydroxygruppen -OH, Carboxylgruppen -COOH, Sulfonsäuregruppen -SO₃H, Carboxamidgruppen -C(O)-NH₂, Amidgruppen -C(O)-NH-sowie Polyethylenoxidgruppen -(CH₂-CH₂-O-)ₙ-H, wobei n bevorzugt für eine Zahl von 1 bis 200 steht.

Die funktionellen Gruppen können direkt an die ethylenische Gruppe angebunden sein, oder aber über eine oder mehrere verknüpfende Kohlenwasserstoffgruppen mit der ethylenischen Gruppe verbunden sein.

Bei den hydrophilen Monomeren (b) handelt es sich bevorzugt um Monomere der allgemeinen Formel H₂C=C(R⁸)R⁹ (III) , wobei R⁸ für H oder Methyl und R⁹ für eine hydrophile Gruppe oder eine, eine oder mehrere hydrophile Gruppen umfassende Gruppe steht.

Bei den Gruppen R⁹ handelt es sich um Gruppen, welche Heteroatome in einer solchen Menge umfassen, so dass die eingangs definierte Wasserlöslichkeit erreicht wird.

Beispiele geeigneter Monomere (b) umfassen saure Gruppen umfassende Monomere, beispielsweise -COOH-Gruppen umfassende Monomere wie Acrylsäure oder Methacrylsäure, Crotonsäure, Itaconsäure, Maleinsäure oder Fumarsäure, Sulfonsäuregruppen umfassende Monomere wie Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Phosphonsäuregruppen umfassende Monomere wie Vinylphosphonsäure, Allylphosphonsäure, N-(Meth)acrylamidoalkylphosphonsäuren oder (Meth)acryloyloxyalkylphosphonsäuren.

Zu nennen sind weiterhin Acrylamid und Methacrylamid sowie Derivate davon, wie beispielsweise N-Methyl(meth)acrylamid, N, N'-Dimethyl(meth)acrylamid sowie N-Methylolacrylamid, N=Vinylderivate wie N-Vinylformamid, N-Vinylacetamid, N-Vinylpyrrolidon oder N-Vinylcaprolactam sowie Vinylester, wie Vinylformiat oder Vinylacetat. N-Vinylderivate können nach Polymerisation zu Vinylamin-Einheiten, Vinylester zu Vinylalkohol-Einheiten hydrolysiert werden.

Weitere Beispiele umfassen Hydroxy- und/oder Ethergruppen umfassende Monomere, wie Beispieleweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹)-COO-(-CH₂-CH(R¹⁰)-O-)_{b}-R¹¹ (IVa) bzw. H₂C=C(R¹)-O-(-CH₂-CH(R¹⁰)-O-)_{b}-R¹¹ (IVb) wobei R¹wie oben definiert ist und b für eine Zahl von 2 bis 200, bevorzugt 2 bis 100 steht. Bei den Resten R⁹ handelt es sich unabhängig voneinander um H, Methyl oder Ethyl, bevorzugt H oder Methyl, mit der Maßgabe, dass es sich bei mindestens 50 mol % der Reste R⁹ um H handelt. Bevorzugt handelt es sich bei mindestens 75 mol % der Reste R⁹ um H, besonders bevorzugt bei mindestens 90 mol % und ganz besonders bevorzugt ausschließlich um H. Bei dem Rest R¹¹ handelt es sich um H, Methyl oder Ethyl, bevorzugt H oder Methyl. Die einzelnen Alkylenoxideinheiten können statistisch oder blockweise angeordnet werden. Bei einem Blockcopolymer kann der Übergang zwischen den Blöcken abrupt oder graduell sein.

Geeignete hydrophile Monomere (b) sind weiterhin Ammoniumgruppen aufweisende Monomere, insbesondere Ammoniumderivate von N-(ω-Aminoalkyl)(meth)acrylamiden oder ω-Aminoalkyl(meth)acrylestern.

Insbesondere kann es sich bei Ammoniumgruppen aufweisenden Monomeren (b) um Verbindungen der allgemeinen Formeln H₂C=C(R⁸)-CO-NR¹⁴-R¹²-NR¹³₃+ X- (Va). und/oder H₂C=C(R⁸)-COO-R¹²-NR¹³₃+ X- (Vb) handeln, wobei R⁸ die oben angegebene Bedeutung hat, also für H oder Methyl steht, R¹² für eine bevorzugt lineare C₁- bis C₄-Alkylengruppe steht und R¹⁴ für H oder eine C₁- bis C₄-Alkylgruppe, bevorzugt H oder Methyl. Bei den Resten R¹³ handelt es sich unabhängig voneinander um C₁-bis C₄-Alkyl, bevorzugt Methyl oder eine Gruppe der allgemeinen Formel -R¹⁵-SO₃H, wobei R¹⁵ für eine bevorzugt lineare C₁- bis C₄-Alkylengruppe oder eine Phenylgruppe steht, mit der Maßgabe, dass es sich im Regelfalle bei nicht mehr als einem der Substituenten R¹³ um einen Sulfonsäuregruppen aufweisenden Substituenten handelt. Besonders bevorzugt handelt es sich bei den drei Substituenten R¹³ um Methylgruppen, d.h. das Monomer weist eine Gruppe -N(CH₃)₃⁺ auf. X⁻ steht in obiger Formel für ein einwertiges Anion, beispielsweise Cl⁻. Selbstverständlich kann X⁻ auch für einen entsprechenden Bruchteil eines mehrwertigen Anionsstehen, obwohl dies nicht bevorzugt ist. Beispiele geeigneter Monomere (b) der allgemeinen Formel (Va) bzw. (Vb) umfassen Salze von 3-Trimethylammonium-propylacrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Die oben genannten hydrophilen Monomere können selbstverständlich nicht nur in der dargestellten Säure- bzw. Baseform eingesetzt werden, sondern auch in-Form entsprechender Salze. Es ist auch möglich, saure oder basische Gruppen nach der Bildung des Polymers in entsprechende Salze umzuwandeln.

### Monomere (c)

Über die hydrophilen Monomere hinaus können die verwendeten Copolymere optional von den Monomeren (a) und (b) verschiedene monoethylenisch ungesättigte. Monomere (c) umfassen. Selbstverständlich können auch Gemische mehrerer verschiedener Monomere (c) eingesetzt werden.

Bei den Monomeren (c) handelt es sich insbesondere um Monomere, welche im Wesentlichen hydrophoben Charakter haben und nur in geringem Maße wasserlöslich sind. Im Regelfalle beträgt die Löslichkeit der Monomere (c) in Wasser bei Raumtemperatur weniger als 100 g/l, bevorzugt weniger als 50 g/l und besonders bevorzugt weniger als 20 g/l.

Beispiele für derartige Monomere (c) umfassen Kohlenwasserstoffe, insbesondere Styrol sowie hydrophobe Derivate wie beispielsweise α-Methylstyrol oder Alkylstyrole wie 4-Methylstyrol oder 4-Ethylstyrol.

Bevorzugt handelt es sich bei den weiteren Monomeren um solche der allgemeinen Formel H₂C=C(R¹⁶)R¹⁷ (VI), wobei R¹⁶ für H oder Methyl und R¹⁷ für eine weitere Gruppe steht, welche im Wesentlichen hydrophoben Charakter aufweist.

Bei R¹⁷ handelt es sich bevorzugt um Carbonsäureestergruppen -COOR¹⁸, wobei es sich bei R¹⁸ um einen geradkettigen oder verzweigten, aliphatischen, cycloaliphatischen und/oder aromatischen Kohlenwasserstoffrest mit 1 bis 30 Kohlenstoffatomen, bevorzugt 2 bis 12 Kohlenstoffatomen handelt. Besonders bevorzugt handelt es sich um einen aliphatischen, geradkettigen oder verzweigten Kohlenwasserstoffrest mit 2 bis 10 Kohlenstoffatomen.

Beispiele derartiger Monomere (c) umfassen Ester der (Meth)acrylsäure, beispielsweise Alkyl(meth)acrylate, wie Methyl(meth)acrylat, Ethyl(meth)acrylat, n-Propyl(meth)acrylat, n-Butyl(meth)acrylat, 2-Ethylhexylacrylat oder 2-Propylheptylacrylat.

Bei R¹⁶ kann es sich weiterhin um Carbonsäureamidgruppen -CONHR¹⁷ bzw.-CON(R¹⁷)₂ handeln, mit der Maßgabe, dass die Anzahl der Kohlenstoffatome im Rest R¹⁸ bzw. beiden Resten R¹⁸ zusammen mindestens 3, bevorzugt mindestens 4 beträgt, wobei die beiden Reste R¹⁸ zusammen auch einen Ring bilden können. Beispiele derartiger Monomere umfassen N-Butyl(meth)acrylamid, N-Cyclohexyl(meth)acrylamid oder N-Benzyl(meth)acrylamid.

Zu den Monomeren (c)-zählen auch solche Monomere, die zwar hydrophile Gruppen neben hydrophoben Gruppen aufweisen, aber bei denen die hydrophoben Molekülteile dominieren, so dass die Monomere nicht mehr die erforderliche Löslichkeit in Wasser aufweisen und somit.alleine dem Polymer auch nicht die erforderliche Löslichkeit verleihen können.

### Monomere (d)

Die verwendeten Copolymere können in Spezialfällen neben den Monomeren (a) und (b) sowie gegebenenfalls(c) optional auch Monomere (d) umfassen, welche über zwei oder mehrere, bevorzugt zwei ethylenisch ungesättigte Gruppen verfügen. Hierdurch kann eine gewisse Vernetzung des Copolymers erreicht werden, sofern das in der vorgesehenen Anwendung des Copolymers keine unerwünschten negativen Auswirkungen hat. Ein zu hoher Vernetzungsgrad sollte aber auf jeden Fall vermieden werden; insbesondere darf die geforderte Wasserlöslichkeit des Copolymers nicht beeinträchtigt werden. Ob eine leichte Vernetzung im Einzelfalle sinnvoll sein kann, richtet sich nach der jeweiligen Anwendung des Copolymers, und der Fachmann trifft eine entsprechende Auswahl.

Beispiele geeigneter Monomere (d) umfassen 1,4-Butandioldi(meth)acrylat, 1,6-Hexandioldi(meth)acrylat, 1,3-Butylenglykoldi(meth)acrylat, Neopentylglykoldi(meth)acrylat, Ethylenglykoldi(meth)acrylat , Diethylenglykoldi(meth)acrylat, Triethylenglykoldi(meth)acrylat oder Oligoethylenglykoldi(meth)acrylate wie bspw. Polyethylenglykol-bis(meth)acrylat, N,N'-Methylenbis(meth)acrylamid, Ethylenglykoldivinylether, Triethylenglykoldivinylether, Triallylamin, Triallylaminmethammoniumchlorid, Tetraallylammoniumchlorid oder Tris(2-hydroxy)isocyanurattri(meth)acrylat.

Sofern überhaupt vorhanden, werden vernetzend wirkende Monomere (d) aber nur in geringen Mengen eingesetzt. Im Regelfalle sollte die Menge der Monomere (d) 1 Gew.-% bezüglich der Menge alle eingesetzten Monomere nicht überschreiten. Bevorzugt sollten nicht mehr als 0,5 Gew.-% und besonders bevorzugt nicht mehr als 0,1 Gew.-% eingesetzt werden. Art und Menge des Vernetzers werden vom Fachmann je nach der gewünschten Anwendung des Copolymers festgelegt.

### Verwendete_Copolymere (A1)

Für die erfindungsgemäße Verwendung zur Erschließung, Ausbeutung und Komplettierung unterirdischer Erdöl- und Erdgaslagerstätten werden die nachfolgen beschriebenen Copolymere (A1) eingesetzt.

Bevorzugt enthält das verwendete Copolymer (A1) nur Monomere (a), (b) und (c) und besonders bevorzugt nur Monomere (a) und (b). Bei den Monomeren (a) handelt es sich bevorzugt nur um eines oder mehrere Monomere der Formel (I). Bevorzugte Monomere (a) der Formel (I) wurden bereits eingangs erwähnt.

Bei dem hydrophob assoziierenden Copolymer (A1) werden die Monomere (a) in einer Menge von 0,1 bis 12 Gew.-%, bevorzugt 0,1 bis 5 Gew.-%, besonders bevorzugt 0,2 bis 3 Gew.-% und ganz besonders bevorzugt 0,3 bis 2 Gew.-% eingesetzt.

Die Menge aller Monomere (b) zusammen beträgt beim Copolymer (A1) 70 bis 99,9 Gew.-%, bevorzugt 80 bis 99,8 Gew.-% bezüglich der Menge aller eingesetzten Monomere. Die Menge aller Monomere (c) zusammen beträgt -sofern vorhandennicht mehr als 29,9 Gew.-%, bevorzugt nicht mehr als 19,9 Gew.-%.

Das verwendete Copolymer (A1) umfasst mindestens ein neutrales Monomer (b1) und mindestens ein anionisches Monomer (b2), welches mindestens eine saure Gruppe ausgewählt aus der Gruppe von -COOH, -SO₃H oder -PO₃H₂ bzw. deren Salze umfasst.

Beispiele geeigneter Monomere (b1) umfassen Acrylamid und Methacrylamid, bevorzugt Acrylamid sowie Derivate davon, wie beispielsweise N-Methyl(meth)acrylamid, N, N'-Dimethyl(meth)acrylamid sowie N-MethylolacryJamid. Weiterhin zu nennen sind N-Vinylderivate wie N-Vinylformamid, N-Vinylacetamid, N-Vinylpyrrolidon oder N-Vinylcaprolactam. Weiterhin zu nennen sind OH-Gruppen aufweisende Monomere wie Hydroxyethyl(meth)acrylat, Hydroxypropyl(meth)acrylat, Allylalkohol, Hydroxyvinylethylether, Hydroxyvinylpropylether oder Hydroxyvinylbutylether. Bevorzugt handelt es sich bei dem Monomer (b1) in Copolymer (A1) um Acrylamid beziehungsweise Derivate davon, besonders bevorzugt um Acrylamid.

Bevorzugt handelt es sich bei den Monomeren (b2) um Carboxylgruppen -COOH und/oder Sulfonsäuregruppen -SO₃H umfassende Monomere, besonders bevorzugt um Sulfonsäuregruppen -SO₃H umfassende Monomere.

Selbstverständlich kann es sich auch um die Salze der sauren Monomere handeln. Geeignete Gegenionen umfassen insbesondere Alkalimetallionen wie Li⁺, Na⁺ oder K⁺ sowie Ammoniumionen wie NH₄⁺ oder Ammoniumionen mit organischen Resten.

Beispiele für anionische Monomere (b2) umfassen Acrylsäure oder Methacrylsäure, Crotonsäure, Itaconsäure, Maleinsäure oder Fumarsäure, Sulfonsäuregruppen umfassende Morlomere wie Vinylsulfonsäure, Allylsulfonsäure, 2-Acrylamido-2-methytpropansutfonsäure (AMPS), 2-Methacrylamido-2-methylpropansulfonsäure, 2-Acrylämidobutansulfonsäure, 3-Acrylamido-3-methyl-butansulfonsäure oder 2-Acrylamido-2,4,4-trimethylpentansulfonsäure oderPhosphonsäuregruppen umfassende Monomere wie Vinylphosphonsäure, Allylphosphonsäure, N-(Meth)acrylamidoalkylphosphonsäuren oder (Meth)acryloyloxyalkylphosphonsäuren.

Beispiele bevorzugter anionischer Monomere (b2) umfassen Acrylsäure, Vinylsulfonsäure, Allylsulfonsäure, 2-Acrylamido-2-methylpropansulfonsäure (AMPS), 2-Acrylamidobutansulfonsäure, 3-Acrylamido-3-methyl-butansulfonsäure und 2-Acrylamido-2,4,4-trimethylpentansulfonsäure, ganz besonders bevorzugt ist 2-Acrylamido-2-methylpropansulfonsäure (AMPS).

Es hat sich bewährt, das neutrale Monomer (b1) in einer Menge von 20 bis 95 Gew.-%, bevorzugt 30 bis 90 Gew.-% und das anionische Monomer (b2) in einer Menge von 4,9 bis 79,9 Gew.-%, bevorzugt 20 bis 69,9 Gew.-% einzusetzen, mit der Maßgabe, dass die Gesamtmenge der Monomere (b) zusammen 70 bis 99,9 Gew.-% beträgt. Die Monomere (a) werden in den oben genannten Mengen eingesetzt.

Beispiele bevorzugter Copolymere (A1) umfassen Copolymere, welche mindestens ein Monomer (a) sowie Acrylamid oder eines der oben genannten Acrylamid-Derivate sowie als Monomer (b2) Sulfonsäuregruppen umfassende Monomere, insbesondere die oben genannten Sulfonsäuregruppen umfassende Monomere und besonders bevorzugt AMPS umfassen.

In einer weiteren bevorzugten Ausführungsform der Erfindung umfasst das Copolymer (A1) mindestens ein neutrales Monomer (b1), mindestens ein anionisches Monomer (b2) und mindestens ein kationisches Monomer (b3).

Bei kationischen Monomeren (b3) handelt es sich in der Regel um Ammoniumgruppen umfassende Monomere, bevorzugt die oben genannten Monomere der Formeln H₂C=C(R⁸)-CO-NR¹⁴-R¹²-NR¹³₃⁺ X⁻ (Va) und/oder H₂C=C(R⁷)-COO-R¹²-NR¹³₃⁺ X⁻ (Vb), wobei die Reste und die jeweils bevorzugten Bereiche bzw. Spezies jeweils wie oben definiert sind. Beispiele bevorzugter Monomere (b3) umfassen 3-Trimethylammonium-propylacrylamidchlorid. (DIMAPAQUAT).

Bei dieser Ausführungsform hat es sich bewährt, das neutrale Monomer (b1) in einer Menge von 20 bis 95 Gew.-%, Bevorzugt 30 bis 90 Gew.-% und die ionischen Monomere (b2) und (b3) zusammen in einer Menge von 4,9 bis 79,9 Gew.-%, bevorzugt 20 bis 69,9 Gew.-% einzusetzen, mit der Maßgabe, dass die Gesamtmenge der Monomere (b) zusammen 70 bis 99,9 Gew.-% beträgt. In einer bevorzugten Ausführungsform beträgt das molare Verhältnis der eingesetzten anionischen Monomere (b2) und der kationischen Monomere (b3) (b2)/(b3) 0,5 bis 1,5, bevorzugt 0,7 bis 1,3, besonders bevorzugt 0,8 bis 1,2 und beispielsweise 0,9 bis 1,1. Durch diese Maßnahme lassen sich Copolymere erhalten, welche besonders unempfindlich auf Salzfracht reagieren.

Beispiele derartiger Copolymere (A1) umfassen Copolymere, welche mindestens ein Monomer (a) sowie Acrylamid oder eines der oben genannten Acrylamid-Derivate sowie als Monomer (b2) Sulfonsäuregruppen umfassende Monomere, insbesondere die oben genannten Sulfonsäuregruppen umfassende Monomere und besonders bevorzugt AMPS umfassen, sowie als Monomer (b3) ein Salz von 3-Trimethylammoniumpropylacrylamid.

Die Copolymere (A1) weisen bevorzugt ein gewichtsmittleres Molekulargewicht M_{w} von 1 000 000 g/mol bis 20 000 000 g/mol auf, bevorzugt 5 000 000 g/mol bis 20 000 000 g/mol und besonders bevorzugt 10 000 000 g/mol bis 20 000 000 g/mol auf.

### Herstellung der hydrophob assoziierenden Copolymere

Die verwendeten Copolymere können nach dem Fachmann prinzipiell bekannten Methoden durch radikalische Polymerisation der Monomere (a) und (b) sowie optional (c) und/oder (d) hergestellt werden, beispielsweise durch Substanz-, Lösungs-, Gel-, Emulsions-, Dispersions- oder Suspensionspolymerisation, bevorzugt in wässriger Phase.

Die Synthese der erfindungsgemäß verwendeten Monomere (a) der Formel (I) werden besonders bevorzugt nach dem oben dargestellten Herstellverfahren durch Alkoxylierung von Alkoholen (III) optional gefolgt von einer Veretherung bereitsgestellt.

In einer bevorzugten Ausführungsformen wird die Herstellung mittels Gelpolymerisation in wässriger Phase vorgenommen, vorausgesetzt alle eingesetzten Monomere weisen eine ausreichende Wasserlöslichkeit auf. Zur Gelpolymerisation wird zunächst eine Mischung aus den Monomeren, Initiatoren und sonstigen Hilfsstoffen mit Wasser oder einem wässrigen Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 50 Gew.-%, bevorzugt.mindestens 80 Gew.-% und besonders bevorzugt mindestens 90 Gew.-% beträgt. Zu nennen als organische Lösemittel sind hierbei insbesondere mit Wasser mischbare Alkohole wie Methanol, Ethanol oder Propanol. Saure Monomere können vor der Polymerisation ganz oder teilweise neutralisiert werden. Bevorzugt ist ein pH-Wert von ca 4 bis ca 9 Die-Konzentration aller Komponenten mit Ausnahme der Lösemittel beträgt üblicherweise ca. 25 bis 60 Gew.-%, bevorzugt ca. 30 bis 50 Gew.-%.

Die Mischung wird anschließen fotochemisch und/oder thermisch polymerisiert, vorzugsweise bei -5 °C bis 50°C. Sofern thermisch polymerisiert wird, setzt man bevorzugt Polymerisationsinitiatoren ein, die schon bei vergleichsweise niedriger Temperatur starten, wie beispielsweise Redoxinitiatoren. Die thermische Polymerisation kann schon bei Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 bis 10°C vorgenommen. Besonders vorteilhaft kann man fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis +10°C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr 99 % erreichten.

Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man eine Polymerisationsapparatur, welche ein Transportband zur Aufnahme der zu polymerisierenden Mischung verfügt. Das Transportband ist mit Einrichtungen zum Erwärmen oder zum Bestrahlen mit UV-Strahlung ausgestattet. Hiernach gießt man die Mischung mittels einer geeigneten Vorrichtung am einen Ende des Bandes auf, im Zuge des Transportes in Bandrichtung polymerisiert die Mischung und am anderen Ende des Bandes kann man das feste Gel abnehmen.

Das Gel wird nach der Polymerisation zerkleinert und getrocknet. Die Trocknung sollte bevorzugt bei Temperaturen unterhalb von 100°C erfolgen. Zum Vermeiden von Zusammenkleben kann man für diesen Schritt ein geeignetes Trennmittel verwenden. Man erhält das hydrophob assoziierende Copolymer als Pulver.

Weitere Einzelheiten zur Durchführung einer Gelpolymerisation sind beispielsweise in DE 10 2004 032 304 A1, Abschnitte [0037] bis [0041] offenbart.

### Verwendung der Copolymere (A1)

Die hydrophob assoziierenden Copolymere werden erfindungsgemäß zur Erschließung, Ausbeutung und Komplettierung unterirdischer Erdöl- und Erdgaslagerstätten verwendet.

Die erfindungsgemäßen Copolymere können beispielsweise als Zusatz zu Bohrflüssigkeiten oder bei der Bohrlochzementierung sowie insbesondere zum Fracturing verwendet werden.

Besonders bevorzugt werden die Copolymere zur tertiären Ötförderung eingesetzt, und zwar zum sogenannten "Polymerfluten". Hierzu wird eine wässrige Formulierung eingesetzt, welche neben Wasser mindestens ein hydrophob assoziierendes Copolymer umfasst. Selbstverständlich können auch Gemische verschiedener Copolymere eingesetzt werden. Darüber hinaus können selbstverständlich noch weitere Komponenten eingesetzt werden. Beispiele weiterer Komponenten umfassen Biozide, Stabilisatoren oder Inhibitoren. Die Formulierung kann bevorzugt hergestellt werden, indem man das Wasser vorlegt und das Copolymer als Pulver einstreut. Die wässrige Formulierung sollte möglichst geringen Scherkräften ausgesetzt werden.

Die Konzentration des Copolymers sollte in der Regel 5 Gew.-% bezüglich der Summe aller Bestandteile der Formulierung nicht überschreiten und beträgt üblicherweise 0,01 bis 5 Gew.-%, insbesondere 0,1 bis 5 Gew.-%, bevorzugt 0,5 bis 3 Gew.-% und besonders bevorzugt 1 bis 2 Gew.-%.

Die Formulierung wird durch mindestens eine Injektionsbohrung in die Erdöllagerstätte eingepresst, und der Lagerstätte wird durch mindestens eine Produktionsbohrung Rohöl entnommen. Mit dem Begriff "Rohöl" ist in diesem Zusammenhang selbstverständlich nicht nur phasenreihes Öl gemeint, sondern der Begriff umfasst auch die üblichen Rohöl-Wasser-Emulsionen. In der Regel wird eine Lagerstätte mit mehreren Injektionsbohrungen und mit mehreren Produktionsbohrungen versehen. Durch den durch die eingepresste Formulierung, die sogenannte "Polymerflut" erzeugten Druck, fließt das Erdöl in Richtung der Produktionsbohrung und wird über die Produktionsbohrung gefördert. Die Viskosität des Flutmediums sollte möglichst an die Viskosität des Erdöls in der Erdöllagerstätte ängepasst werden. Die Viskosität kann insbesondere über die Konzentration des Copolymers eingestellt werden.

Zur Erhöhung der Erdölausbeute kann das Polymerfluten vorteilhaft mit anderen Techniken der tertiären Erdölförderung kombiniert werden.

In einer bevorzugten Ausführungsform der Erfindung kann das "Polymerfluten" unter Verwendung der erfindungsgemäßen hydrophob assoziierenden Copolymere mit einem vorangehenden, sogenannten "Tensidfluten" kombiniert werden. Hierbei wird vor dem Polymerfluten zunächst eine wässrige Tensidformulierung in die Erdölformation eingepresst werden. Hierdurch wird die Grenzflächenspannung zwischen dem Formationswasser und dem eigentlichen Erdöl verringert und somit die Mobilität des Erdöls in der Formation erhöht. Durch die Kombination beider Techniken lässt sich die Erdölausbeute erhöhen.

Beispiele geeigneter Tenside zum Tensidfluten umfassen Sulfatgruppen, Sulfonatgruppen, Polyoxyalkylengruppen, anionisch modifizierten Polyoxyalkylengruppen, Betaingruppen, Glucosidgruppen oder Aminoxidgruppen aufweisende Tenside, wie beispielsweise Alkylbenzolsulfonate, Olefinsulfonate oder Amidopropylbetaine. Bevorzugt können anionische und/öder betainische Tenside eingesetzt werden.

Dem Fachmann sind Einzelheiten zur technischen Durchführung des "Polymerflutens" und des "Tensidflutens" bekannt, und er wendet je nach Art der Lagerstätte eine entsprechende Technik an.

Es ist selbstverständlich auch möglich Tenside und die erfindungsgemäßen Copolymere im Gemisch einzusetzen.

Die Copolymere (A1) zeichnen sich für die beschriebene Verwendung zur Erschließung, Ausbeutung und Komplettierung, insbesondere die tertiäre Erdölförderung durch eine besonders hohe Temperatur- und Salzstabilität aus. Weiterhin führt die erfindungsgemäße Verwendung der Monomere (a) der Formel (I) zu Copolymeren mit einem besonders niedrigen Gelanteil. Hierdurch wird ein Verstopfen der Erdöllagerstätte wirksam vermieden.

Die folgenden Beispiele sollen die Erfindung näher erläutern:

### Teil A) Herstellung der Monomere (I)

### Herstellung eines Hydroxybutylvinyletheralkoxylats mit 22 EO-Einheiten und 8 PeO-Einheiten (Monomer M1):

In einem 1 L Rührautoklaven aus Edelstahl wurden 52,3 g Hydroxybutylvinylether vorgelegt. Anschließen wurden 2,99 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 436 g EO innerhalb von ca. 3,5 h dosiert. Nach einer halbstündigen Nachreaktion bei 140 °C wurde der Reaktor auf 125 °C abgekühlt und es-wurden innerhalb von 3,0 h insgesamt 310 g Pentenoxid eindosiert. Die Nachreaktion lief über Nacht.

Das Produkt hatte eine OH-Zahl von 34,2 mg KOH/g (Theorie: 31,6 mg KOH/g). Die OH-Zahl wurde mittels der ESA-Methode ermittelt.

### Herstellung eines Hydroxybutylvinyletheralkoxylats mit 22 EO-Einheiten und 12 PeO-Einheiten (Monomer M2):

In einem 1 L Rührautoklaven aus Edelstahl wurden 44,1 g Hydroxybutylvinylether vorgelegt. Ansehließend wurden 3,12 g KOMe (32 %ig in MeOH) dosiert und das Methanol bei 80 °C und ca. 30 mbar abgezogen. Anschließend wurde auf 140°C aufgeheizt, der Reaktor mit Stickstoff gespült und ein Stickstoff-Vordruck von 1,0 bar eingestellt. Anschließend wurden 368 g EO innerhalb von ca. 3 h dosiert. Nach einer halbstündigen Nachreaktion bei 140 °C wurde der Reaktor auf 125 °C abgekühlt und es wurden innerhalb von 3,5 h insgesamt 392 g Pentenoxid eindosiert. Die Nachreaktion lief über Nacht.

Das Produkt hatte eine OH-Zahl von 31,9 mg KOH/g (Theorie: 26,5 mg KOH/g). Die OH-Zahl wurde mittels der ESA-Methode ermittelt.

### Herstellung eines Hydroxybutylvinyletheralkoxylats mit 22 EO-Einheiten und 16 PeO-Einheiten (Monomer M3):

In, einem 1 L Rührautoklaven aus Edelstahl wurden 37,8 g Hydroxybutylvinylether vorgelegt. Anschließend wurden 3,01 g KOMe (32 %ig in MeOH) dosiert und das Methanol bei 80 °C und ca. 30 mbar abgezogen. Anschließend wurde auf 140°C aufgeheizt, der Reaktor mit Stickstoff gespült und ein Stickstoff-Vordruck von 1,0 bar eingestellt. Anschließend wurden 315 g EO innerhalb von ca. 3 h dosiert. Nach einer halbstündigen Nachreaktion bei 140 °C wurde der Reaktor auf 125°C abgekühlt und es wurden innerhalb von 4,5 h insgesamt 448 g Pentenoxid eindosiert. Die Nachreaktion lief über Nacht.

Das Produkt hatte eine OH-Zahl von 25,2 mg KOH/g (Theorie: 22,7 mg KOH/g). Die OH-Zahl wurde mittels der ESA-Methode ermittelt.

### Herstellung eines Hydroxybutylvinyletheralkoxylats mit 22 EO-Einheiten und 20 PeO-Einheiten (Monomer M4):

In einem 1 L Rührautoklaven aus Edelstahl wurden 33,2 g Hydroxybutylvinylether vorgelegt. Anschließend wurden 3,01 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 277 g EO innerhalb von ca. 2,5 h dosiert. Nach einer halbstündigen Nachreaktion bei 140 °C wurde der Reaktor auf 125 °C abgekühlt und es wurden innerhalb von 5 h insgesamt 492 g Pentenoxid eindosiert. Die Nachreaktion lief über Nacht.

Das Produkt hatte eine OH-Zahl von 23,2 mg KOH/g (Theorie: 20,0 mg KOH/g). Die OH-Zahl wurde mittels der ESA-Methode ermittelt:

### Herstellung eines Hydroxybutylvinyletheralkoxylats mit 68 EO-Einheiten und 8 PeO-Einheiten (Monomer M5):

In einem 1 L Rührautoklaven aus Edelstahl wurden 24,3 g Hydroxybutylvinylether vorgelegt. Anschließend wurden 2,98 g KOMe (32 %ig in MeOH) -dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 627 g EO innerhalb von ca. 5,5 h dosiert. Nach einer halbstündigen Nachreaktion bei 140 °C wurde der Reaktor auf 125 °C abgekühlt und es wurden innerhalb von 2,5 h insgesamt 144 g Pentenoxid eindosiert. Die Nachreaktion lief über Nacht.

Das Produkt hatte eine OH-Zahl von 17,6 mg KOH/g (Theorie: 14,7 mg KOH/g). Die OH-Zahl wurde mittels der ESA-Methode ermittelt.

### Herstellung eines Hydroxybutylvinyletheralkoxylats mit 22 EO-Einheiten und 12 PeO-Einheiten (Monomer M6):

In einem 1 L Rührautoklaven aus Edelstahl wurden 22,5 g Hydroxybutylvinylether vorgelegt. Anschließend wurden 3,01 g KOMe (32 %ig in MeOH) dosiert und das Methanol bei 80 °C und ca. 30 mbar abgezogen. Anschließend wurde auf 140 °C aufgeheizt, der Reaktor mit Stickstoff gespült und ein Stickstoff-Vordruck von 1,0 bar eingestellt. Anschließend wurden 580 g EO innerhalb von ca. 5 h dosiert. Nach einer halbstündigen Nachreaktion bei 140 °C wurde der Reaktor auf 125 °C abgekühlt und es wurden innerhalb von 3,0 h insgesamt 200 g Pentenoxid eindosiert. Die Nachreaktion lief über Nacht.

Das Produkt hatte eine OH-Zahl von 16,8 mg KOH/g (Theorie: 13,5 mg KOH/g). Die OH-Zahl wurde mittels der ESA-Methode ermittelt.

### Herstellung eines Hydroxybutylvinyletheralkoxylats mit 132 EO-Einheiten und-8 PeO-Einheiten (Monomer M7):

In einem 1 L Rührautoklaven aus Edelstahl wurden 14,1 g Hydroxybutylvinylether vorgelegt: Anschließend wurden 3,02 g KOMe (32 %ig in MeOH) dosiert und das Methanol bei 80 °C und ca. 30 mbar abgezogen. Anschließend wurde auf 140°C aufgeheizt, der Reaktor mit Stickstoff gespült und ein Stickstoff-Vordruck von 1,0 bar eingestellt. Anschließend wurden 706 g.EO innerhalb von ca. 8 h dosiert. Nach einer halbstündigen Nachreaktion bei 140 °C wurde der Reaktor abgekühlt. Am nächsten Tag wurden bei 125 °C innerhalb von 2,0 h insgesamt 83,6 g Pentenoxid eindosiert. Es schloss sich eine Nachreaktion von 5 Stunden bei 125 °C an.

Das Produkt hatte eine OH-Zahl von 10,2 mg KOH/g (Theorie: 8,5 mg KOH/g). Die OH-Zahl wurde mittels der ESA-Methode ermittelt.

Die Daten der synthetisierten Monomere M1 bis M7 sind in der nachfolgenden Tabelle 1 zusammengestellt. Alle Monomere weisen eine terminale OH-Gruppe auf.

**Tabelle 1: Synthetisierte Monomere (I)**

| Monomer Nr. | Alkohol | Block 1 | Block 2 | | OH-Zahl [mg KOH / g] |
|---|---|---|---|---|---|
| | | Anzahl der EO-Einheiten | Alkylenoxid | Anzahl der Einheiten | |
| M1 | 4-Hydroxybutylvinylether | 22 | Pentenoxid | 8 | 34,2 |
| M2 | 4-Hydroxybutylvinylether | 22 | Pentenoxid | 12 | 31,9 |
| M3 | 4-Hydroxybutylvinylether | 22 | Pentenoxid | 16 | 25,2 |
| M4 | 4-Hydroxybutylvinylether | 22 | Pentenoxid | 20 | 23,2 |
| M5 | 4-Hydroxybutylvinylether | 68 | Pentenoxid | 8 | 17,6 |
| M6 | 4-Hydroxybutylvinylether | 68 | Pentenoxid | 12 | 16,8 |
| M7 | 4-Hydroxybutylvinylether | 132 | Pentenoxid | 8 | 10,2 |

Für die Vergleichsversuche wurden kommerziell erhältliche, hydrophob assoziierende Monomere der nachfolgenden allgemeinen Formel eingesetzt: H₂C=C(CH₃)-COO-(EO)ₓ-R.
R und x haben hierbei bei den Monomeren M8 und M9 die folgende Bedeutung:
M8: x = 25, R=Tristyrylphenyl-
M9: x = 7, R= n-Dodecyl

### Teil B) Herstellung der hydrophob assoziierenden Copolymere

### Beispiel 1:

Hydrophob, assoziierendes amphoteres Copolymer vom Typ (A1) aus Acrylamid (35,9 Gew.-%), einem anionischen Monomer (Acrylamido-2-methylpropansulfonsaure, Na-Salz, 32,1 Gew.-%), einem kationischen Monomer (3-Trimethylammonium-propylacrylamidchlorid, 31,0 Gew.-%) sowie dem erfindungsgemäßen Monomer M1 (1 Gew.-%)

In einem 2 I-Dreihalskofben mit Rührer und Thermometer wurden die folgenden Komponenten miteinander gemischt:

| | |
|---|---|
| 139,1 g | Acrylamido-2-methylpropansulfonsäure, Na-Salz (58 Gew.-%ige Lösung in Wasser; 17,6 Mol %), |
| 1,2 g | Siliconentschäumer, |
| 2,4 g | Pentanatriumdiethylentriaminpentaacetat (Komplexbildner), |
| 111,6 g | 3-Trimethylammonium-propylacrylamidchlorid (60 Gew.-%ige Lösung in Wasser; 18,8 Mol %), |
| 160,1 g | Acrylamid (50 Gew.-%ige Lösung in Wasser; 63,5 Möl%), |
| 2,1 g | Monomer M1, |
| 12 g | Harnstoff |

Als Molekulargewichtsregler wurden 1,5 g Natriumhypophosphit (0,1 Gew.-%ige Lösung in Wasser) zugegeben. Die Lösung wurde mit 20 %iger Natronlauge auf pH 6 eingestellt, durch 10 minütiges Spülen mit Stickstoff inertisiert und auf ca. 5°C abgekühlt. Die Lösung wurde in einen Plastikbehälter umgefüllt und anschließend wurden nacheinander 150 ppm 2,2'-Azo-bis-(2-amidinopröpan)-dihydrochlorid (als 1 Gew.-%ige Lösung), 10 ppm *tert*.-Butylhydroperoxid (als 0,1 Gew.-%ige Lösung) und 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Vergleichsbeispiel 1:

Polymer analog Beispiel 1, aber ohne hydrophob assoziierendes Monomer

In einem 2 I-Dreihalskolben mit Rührer und Thermometer wurden die folgenden Komponenten miteinander gemischt:

| | |
|---|---|
| 139,1 g | Acrylamido-2-methylpropansulfönsäure, Na-Salz (58 Gew.-%ige Lösung in Wasser; 17,4 Mol%), |
| 1,2 g | Siliconentschäumer, |
| 2,4 g | Pentanatriumdiethylentriaminpentaacetat (Komplexbildner), |
| 111,6 g | 3-Trimethylammonium-propylacrylamidchlorid (60 Gew.-%ige Lösung in Wasser; 18,5 Mol%), |
| 164,5 g | Acrylamid (50 Gew.-%ige Lösung in Wasser; 64,2 Mol%), |
| 12 g | Harnstoff |

Die Lösung wurde mit 20 %iger Natronlauge auf pH 6 eingestellt, durch 10 minütiges Spülen mit Stickstoff inertisiert und auf ca. 5°C abgekühlt. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 10 ppm *tert.-*Butylhydroperoxid (als 0,1 Gew.-%ige Lösung) und 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Vergleichsbeispiel 2:

Polymer analog Beispiel 1, aber anstelle des erfindungsgemäßen hydrophob assoziierenden Monomers wurde das Monomer M8 eingesetzt

In einem 2 I-Dreihalskolben mit Rührer und Thermometer wurden die folgenden Komponenten miteinander gemischt:

| | |
|---|---|
| 139,1 g | Acrylamido-2-methylpropansulfonsäure, Na-Salz (58 Gew.-%ige Lösung in Wasser; 17,6 Mol%), |
| 1,2 g | Siliconentschäumer, |
| 2,4 g | Pentanatriumdiethylentriaminpentaacetat (Komplexbildner); |
| 111,6 g | 3-Trimethylammonium-propylacrylamidchlorid (60 Gew.-%ige Lösung in Wasser; 18,8 Mol%), |
| 155,2 g | Acrylamid (50 Gew.-%ige Lösung in Wasser; 63,5 Mol%), |
| 3,5 g | Monomer M8, |
| 12 g | Harnstoff |

Als Molekulargewichtsregler wurden 1,5 g Natriumhypophosphit (0,1 Gew.-%ige Lösung in Wasser) zugegeben. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 10 ppm *tert.*-Butylhydroperoxid (als 0,1 Gew.-%ige Lösung) and 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt, es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Vergleichsbeispiel 3:

Polymer analog Beispiel 1, aber anstelle des erfindungsgemäßen hydrophob assoziierenden Monomers wurde das Monomer M9 eingesetzt

In einem 2 I-Dreihalskolben mit Rührer und Thermometer wurden die folgenden Komponenten miteinander gemischt:

| | |
|---|---|
| 139,0 g | Acrylamido-2-methylpropansulfonsäure, Na-Salz (58 Gew.-%ige Lösung in Wasser; 17,6 Mol%), |
| 1,2 g | Siliconentschäumer, |
| 2,4 g | Pentanatriumdiethylentriaminpentaacetat (Komplexbildner), |
| 111,6 g | 3-Trimethylammonium-propylacrylamidchlorid (60 Gew.-%ige Lösung in Wasser; 18,8 Mol%), |
| 155,2 g | Acrylamid (50 Gew.-%ige Lösung in Wasser; 63,4 Mol%), |
| 2,2 g | Monomer M9, |
| 12 g | Harnstoff |

Als Molekulargewichtsregler wurden 1,5 g Natriumhypophosphit (0,1 Gew.-%ige Lösung in Wasser) zu gegeben. Die Lösung wurde in einen Plastikbehälter umgefüllt und anschließend wurden nacheinander 150 ppm 2,2'-Azo-bis-(2-amidinopropan)-dihydrochlorid (als 1 Gew.-%ige Lösung), 10 ppm *tert*.-Butylhydroperoxid (als 0,1 Gew.-%ige Lösung) und 20 ppm Natriumhydroxymethansulfinat (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen. Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Beispiele 2 bis 8:

Hydrophob, assoziierende Copolymere vom Typ (A1) aus Acrylamid (48 Gew.-%) und Acrylamido-2-methylpropansulfonsäure, Na-Salz (50 Gew.-%) sowie einem erfindungsgemäßen, hydrophob assoziierende Monomer (2 Gew.-%)

In einem 2 I-Dreihalskolben mit Rührer und Thermometer wurden die folgenden Komponenten miteinander gemischt:

| | |
|---|---|
| 290 g | destilliertes Wasser, |
| 242,5 g | Acrylamido-2-methylpropansulfonsäure, Na-Salz (58 Gew.-%ige Lösung in Wasser; 24,7 Mol%), |
| 1,2 g | Siliconentschäumer, |
| 2,4 g | Pentanatriumdiethylentriaminpentaacetat (Komplexbildner), |
| 228,8 g | Acrylamid (50 Gew.-%ige Lösung in Wasser; 75,2 Mol%), |
| 4,6 g | Monomere eines der Monomere M1 bis M7 (gemäß Tabelle) |

Die Lösung wurde mit 20 %iger Natronlauge auf pH 6 eingestellt, durch 10 minütiges Spülen mit Stickstoff inertisiert und auf ca. 5°C abgekühlt. Die Lösung wurde in einen Plastikbehälter umgefüllt und anschließend wurden nacheinander 200 ppm 2,2'-Azo-bis-(2-amidinopropan)-dihydrochlorid (als 1 Gew.-%ige Lösung), 10 ppm *tert.-*Butylhydroperoxid (als 0,1 Gew.-%ige Lösung), 5 ppm FeSO₄*7H₂O (als 1 Gew.-%ige Lösung) und 6 ppm Natriumbisulfit (als 1 Gew.-%ige Lösung) zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm x 5 cm x 5 cm große Gelwürfel geschnitten. Bevor die Gelwürfel mittels eines herkömmlichen Fleischwolfs zerkleinert wurden, wurden sie mit einem handelsüblichen Trennmittel eingestrichen Bei dem Trennmittel handelt es sich um eine Polydimethylsiloxanemulsion, die 1:20 mit Wasser verdünnt wurde. Das erhaltene Gelgranulat wurde gleichmäßig auf Trockengitter verteilt und in einem Umlufttrockenschrank bei ca. 90 bis 120°C in Vakuum bis zur Gewichtskonstanz getrocknet.

### Teil C) Anwendungstechnische Tests

### Bestimmung des Gelanteils:

1 g des jeweiligen Copolymers wird in 249 g synthetischem Meerwasser nach DIN 50900 24 h lang bis zum vollständigen Lösen gerührt. Anschließend wird die Lösung über ein 200 µm Sieb filtriert und das Volumen des auf dem Sieb verbleibenden Rückstands gemessen. Dieser Wert ist der Gelanteil.

### Bestimmung der Viskosität:

Von dem Filtrat wird mit einem Rheometer mit Doppelspaltgeometrie die Viskosität bei 7 s⁻¹ und 60°C gemessen.

Die Ergebnisse sind in den Tabellen 2 und 3 zusammengestellt.

**Tabelle 2: Ergebnisse der anwendungstechnischen Versuche mit amphoteren Copolymeren des Typs (A1)**

| Copolymer | Hydrophob assoziierendes Monomer | Gelanteil [ml] | Viskosität [mPas] |
|---|---|---|---|
| Beispiel 1 | M1 | < 5 | 25 |
| V1 | ohne | <5 | 10 |
| V2 | M8 | 8 | 16 |
| V3 | M9 | 9 | 12 |

**Tabelle 3: Ergebnisse der anwendungstechnischen Versuche mit Copolymeren des Typs (A1) aus Acrylamid und AMPS**

| Copolymer | Verwendetes Monomer | Anzahl EO-Einheiten | Anzahl Pentenoxid-Einheiten | Viskosität [mPas] |
|---|---|---|---|---|
| Beispiel 2 | M1 | 22 | 8 | 27 |
| Beispiel 3 | M2 | 22 | 12 | 52 |
| Beispiel 4 | M3 | 22 | 16 | 9 |
| Beispiel 5 | M4 | 22 | 20 | 22 |
| Beispiel 6 | M5 | 68 | 8 | 17 |
| Beispiel 7 | M6 | 68 | 12 | 30 |
| Beispiel 8 | M7 | 132 | 8 | 3 |

Die Daten in Tabelle 2 zeigen, dass die Lösung des erfindungsgemäßen Copolymers gemäß Beispiel 1 in Meerwasser die höchste Viskosität von allen getesteten Copolymeren bei gleichzeitig niedrigem Gelanteil aufweist. Das Copolymer gemäß Vergleichsbeispiel 1, also ohne Monomere, die hydrophob assoziieren können, weist ebenfalls einen niedrigen Gelanteil auf, naturgemäß ist aber auch die Viskosität geringer. Die Monomere gemäß Stand der Technik M8 und M9 erhöhen zwar erwartungsgemäß die Viskosität, aber bei weitem nicht so stark wie die erfindungsgemäß verwendeten Monomere und außerdem ist der Gelanteil jeweils signifikant höher.

Tabelle 3 zeigt, dass die Viskosität der erfindungsgemäßen Copolymere von der Natur der verwendeten Monomere abhängt. Beispiel 3 repräsentiert die beste, derzeit bekannte Ausführungsform der Erfindung.

## Patentansprüche

1. Verwendung von wasserlöslichen, hydrophob assoziierenden Copolymeren bei der Erschließung, Ausbeutung und Komplettierung unterirdischer Erdöl- und Erdgaslagerstätten, **dadurch gekennzeichnet, dass** die Copolymere mindestens
(a) 0,1 bis 12 Gew.-% mindestens eines monoethylenisch ungesättigten, hydrophob assoziierenden Monomers (a), sowie
(b) 70 Gew.-% bis 99,9 Gew.-% mindestens zweier davon verschiedener, monoethylenisch ungesättigter, hydrophiler Monomere (b) umfassen, und es sich bei den Monomeren (b) um
• mindestens ein neutrales hydrophiles Monomer (b1), und
• mindestens ein hydrophiles anionisches Monomer (b2) handelt, welches mindestens eine saure Gruppe ausgewählt aus der Gruppe von -COOH,-SO₃H oder -PO₃H₂ bzw. deren Salze umfasst,
wobei die Mengenangaben jeweils auf die Gesamtmenge aller Monomere im Copolymer bezogen sind, und es sich bei mindestens einem der Monomere (a) um ein Monomer der allgemeinen Formel (I)
H₂C=C(R¹)-R⁴-O-(-CH₂-CH(R²)-O-)ₖ-(-CH₂-CH(R³)-O-)ₗ-R⁵ (I)
handelt, wobei die Einheiten -(-CH₂-CH(R²)-O-)ₖ und -(-CH₂-CH(R³)-O-)ₗ in Blockstruktur in der in Formel (I) dargestellten Reihenfolge angeordnet sind und die Reste und Indices die folgende Bedeutung haben:
k: eine Zahl von 10 bis 150,
l: eine Zahl von 5 bis 25,
R¹: H oder Methyl,
R²: unabhängig voneinander H, Methyl oder Ethyl, mit der Maßgabe, dass es sich bei mindestens 50 mol % der Reste R² um H handelt,
R³: unabhängig voneinander ein Kohlenwasserstoffrest mit mindestens 2 Kohlenstoffatomen oder eine Ethergruppe der allgemeinen Formel -CH₂-O-R^{2'}, wobei R^{2'} für einen Kohlenwasserstoffrest mit mindestens 2 Kohlenstoffatomen steht,
R⁴: eine Einfachbindung oder eine zweiwertige, verknüpfende Gruppe, ausgewählt aus der Gruppe von -(CₙH₂ₙ)- [R^{4a}], -O-(C_{n'}H_{2n'})- [R^{4b}] und -C(O)-O-(C_{n"}H_{2n"})- [R^{4c}], wobei n, n' und n" jeweils für eine natürliche Zahl von 1 bis 6 steht,
R⁵: H oder ein Kohlenwasserstoffrest mit 1 bis 30 C-Atomen.

2. Verwendung gemäß Anspruch 1, **dadurch gekennzeichnet, dass** man die Copolymere zur tertiären Erdölförderung verwendet, wobei man eine wässrige Formulierung der besagten Copolymere in einer Konzentration von 0,01 bis 5 Gew.-% durch mindestens eine Injektionsbohrung in eine Erdöllagerstätte eingepresst und der Lagerstätte durch mindestens eine Produktionsbohrung Rohöl entnimmt.

3. Verwendung gemäß Anspruch 2, **dadurch gekennzeichnet, dass** die Konzentration der Copolymere 0,1 bis 2 Gew. % beträgt.

4. Verwendung gemäß Anspruch 2 oder 3, **dadurch gekennzeichnet, dass** man das Polymerfluten mit einem vorangehenden Tensidfluten kombiniert, bei dem zunächst eine wässrige Tensidformulierung in die Erdölformation eingepresst wird.

5. Verwendung gemäß Anspruch 4, **dadurch gekennzeichnet, dass** es sich bei den Tensiden zum Tensidfluten um mindestens eines ausgewählt aus der Gruppe von Sulfatgruppen, Sulfonatgruppen, Polyoxyalkylengruppen, anionisch modifizierten Polyoxyalkylengruppen, Betaingruppen, Glucosidgruppen oder Aminoxidgruppen aufweisenden Tenside handelt.

6. Verwendung gemäß Anspruch 4, **dadurch gekennzeichnet, dass** es sich bei den Tensiden zum Tensidfluten um anionische und/oder betainische Tenside handelt.

7. Verwendung gemäß einem der Ansprüche 1 bis 6, **dadurch gekennzeichnet, dass** es sich bei dem neutralen Monomer (b1) um ein Monomer ausgewählt aus der Gruppe von (Meth)acrylamid, N-Methyl(meth)acrylamid, N,N'-Dimethyl(meth)acrylamid, N-Methylol(meth)acrylamid oder N-Vinyl-2-pyrrolidon handelt, und bei dem Monomer (b2) um mindestens eines ausgewählt aus der Gruppe von (Meth)acrylsäure, Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Vinylphosphonsäure.

8. Verwendung gemäß Anspruch 7, **dadurch gekennzeichnet, dass** es sich bei dem Monomer (b1) um Acrylamid und bei dem Monomer (b2) um 2-Acrylamido-2-methylpropansulfonsäure (AMPS) handelt.

9. Verwendung gemäß einem der Ansprüche 1 bis 7, **dadurch gekennzeichnet, dass** das Copolymer darüber hinaus noch mindestens ein kationisches, Ammoniumgruppen aufweisendes Monomer (b3) umfasst.

10. Verwendung gemäß Anspruch 9, **dadurch gekennzeichnet dass** es sich bei dem kationischen Monomer (b3) um Salze von 3-Trimethylammoniumpropyl(meth)acrylamiden und 2-Trimethylammoniumethyl(meth)acrylaten handelt.

11. Verwendung gemäß einem der Ansprüche 1 bis 10, **dadurch gekennzeichnet, dass** die Menge der Monomere (a) 0,1 bis 5 Gew. % bezüglich der Menge aller Monomere im Copolymer beträgt.

12. Verwendung gemäß einem der Ansprüche 1 bis 11, **dadurch gekennzeichnet, dass** die neutralen Monomere (b1) in einer Menge von 30 bis 90 Gew. % und die anionischen Monomere (b2) in einer Menge von 20 bis 69,9 Gew. % eingesetzt werden.

## Claims

1. The use of water-soluble, hydrophobically associating copolymers in the development, exploitation and completion of subterranean mineral oil deposits and natural gas deposits, wherein the copolymers comprise at least
(a) 0.1 to 12% by weight of at least one monoethylenically unsaturated, hydrophobically associating monomer (a), and
(b) 70% by weight to 99.9% by weight of at least two monoethylenically unsaturated hydrophilic monomers (b) different therefrom, and the monomers (b) are
• at least one neutral hydrophilic monomer (b1), and
• at least one hydrophilic anionic monomer (b2) which comprises at least one acid group selected from the group of -COOH, -SO₃H or -PO₃H₂ or salts thereof,
where the quantitative data are based in each case on the total amount of all of the monomers in the copolymer, and at least one of the monomers (a) is a monomer of the general formula (I)
H₂C=C(R¹)-R⁴-O-(-CH₂-CH(R²)-O-)ₖ-(-CH₂-CH(R³)-O-)ₗ-R⁵ (I)
where the units -(-CH₂-CH(R²)-O-)ₖ and -(-CH₂-CH(R³)-O-)ₗ are arranged in block structure in the order shown in formula (I) and the radicals and indices have the following meaning:
k: a number from 10 to 150,
l: a number from 5 to 25,
R¹: H or methyl,
R²: independently of one another, H, methyl or ethyl, with the proviso that at least 50 mol% of the radicals R² are H,
R³: independently of one another, a hydrocarbon radical having at least 2 carbon atoms or an ether group of the general formula -CH₂-O-R^{2'}, where R^{2'} is a hydrocarbon radical having at least 2 carbon atoms,
R⁴: a single bond or a divalent linking group, selected from the group of -(CₙH₂ₙ)-[R^{4a}], -O-(C_{n'}H_{2n'})- [R^{4b}] and -C(O)-O-(C_{n"}H2_{n"}) [R^{4c}], where n, n' and n" is in each case a natural number from 1 to 6,
R⁵: H or a hydrocarbon radical having 1 to 30 carbon atoms.

2. The use according to claim 1, wherein the copolymers are used for enhanced oil recovery, where an aqueous formulation of said copolymers in a concentration of 0.01 to 5% by weight is injected through at least one injection bore into a mineral oil deposit and crude oil is removed from the deposit through at least one production bore.

3. The use according to claim 2, wherein the concentration of the copolymers is 0.1 to 2% by weight.

4. The use according to claim 2 or 3, wherein the polymer flooding is combined with a preceding surfactant flooding, in which firstly an aqueous surfactant formulation is injected into the mineral oil formation.

5. The use according to claim 4, wherein the surfactants for the surfactant flooding are at least one selected from the group of surfactants containing sulfate groups, sulfonate groups, polyoxyalkylene groups, anionically modified polyoxyalkylene groups, betaine groups, glucoside groups or amine oxide groups.

6. The use according to claim 4, wherein the surfactants for the surfactant flooding are anionic and/or betainic surfactants.

7. The use according to any one of claims 1 to 6, wherein the neutral monomer (b1) is a monomer selected from the group of (meth)acrylamide, N-methyl(meth)acrylamide, N,N'-dimethyl(meth)acrylamide, N-methylol(meth)acrylamide or N-vinyl-2-pyrrolidone, and the monomer (b2) is at least one selected from the group of (meth)acrylic acid, vinylsulfonic acid, allylsulfonic acid, 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid or 2-acrylamido-2,4,4-trimethylpentanesulfonic acid or vinylphosphonic acid.

8. The use according to claim 7, wherein the monomer (b1) is acrylamide and the monomer (b2) is 2-acrylamido-2-methylpropanesulfonic acid (AMPS).

9. The use according to any one of claims 1 to 7, wherein the copolymer moreover also comprises at least one cationic monomer (b3) having ammonium groups.

10. The use according to claim 9, wherein the cationic monomer (b3) is salts of 3-trimethylammonium propyl(meth)acrylamides and 2-trimethylammonium ethyl (meth)acrylates.

11. The use according to any one of claims 1 to 10, wherein the amount of the monomers (a) is 0.1 to 5% by weight with regard to the amount of all of the monomers in the copolymer.

12. The use according to any one of claims 1 to 11, wherein the neutral monomers (b1) are used in an amount from 30 to 90% by weight and the anionic monomers (b2) are used in an amount from 20 to 69.9% by weight.

## Revendications

1. Utilisation de copolymères s'associant de manière hydrophobe, soluble dans l'eau, lors de l'exploration, de l'exploitation et de la complétion de gisements souterrains de pétrole et de gaz naturel, **caracterisée en ce que** les copolymères comprennent au moins
(a) 0,1 à 12% en poids d'au moins un monomère (a) éthyléniquement monoinsaturé, s'associant de manière hydrophobe, ainsi que
(b) 70% en poids à 99,9% en poids d'au moins deux monomères (b) éthyléniquement monoinsaturés, hydrophiles, différents de celui-ci, et où il s'agit, pour les monomères (b),
• d'au moins un monomère hydrophile neutre (b1), et
• d'au moins un monomère (b2) anionique hydrophile, qui comprend au moins un groupe acide choisi dans le groupe formé par -COOH, -SO₃H ou -PO₃H₂ ou leurs sels,
les indications de quantités se rapportant à chaque fois à la quantité totale de tous les monomères dans le copolymère, et il s'agit, pour au moins un des monomères (a), d'un monomère de formule générale (I)
H₂C=C(R¹)-R⁴-O-(-CH₂-CH(R²)-O-)ₖ-(-CH₂-CH(R³)-O-)ₗ-R⁵ (I)
les unités - (-CH₂-CH(R²)-O-)ₖ et - (-CH₂-CH(R³)-O-)ₗ dans la structure à blocs étant disposées dans l'ordre représenté dans la formule (I) et les radicaux et indices présentant la signification suivants :
k : un nombre de 10 à 150,
l : un nombre de 5 à 25,
R¹ : H ou méthyle,
R² : indépendamment l'un de l'autre, H, méthyle ou éthyle, à condition qu'il s'agisse, pour au moins 50% en mole des radicaux R², de H,
R³ : indépendamment l'un de l'autre, un radical hydrocarboné comprenant au moins 2 atomes de carbone ou un groupe éther de formule générale -CH₂-O-R^{2'}, où R^{2'} représente un radical hydrocarboné comprenant au moins 2 atomes de carbone,
R⁴ : une liaison simple ou un groupe de liaison divalent choisi dans le groupe formé par-(CₙH₂ₙ)- [R^{4a}], -O-(C_{n'},H_{2n'})-[R^{4b}] et -C(O)-O-(C_{n"}H_{2n"})- [R^{4c}] où n, n' et n" dans chaque cas vaut un nombre naturel de 1 à 6,
R⁵: H ou un radical hydrocarboné comprenant 1 à 30 atomes de carbone.

2. Utilisation selon la revendication 1, **caractérisée en ce qu'**on utilise les copolymères pour l'exploitation tertiaire de pétrole, où on injecte une formulation aqueuse desdits copolymères en une concentration de 0,01 à 5% en poids dans au moins un trou d'injection dans un gisement de pétrole et on prélève du gisement, via au moins un trou de production, du pétrole.

3. Utilisation selon la revendication 2, **caractérisée en ce que** la concentration des copolymères est de 0,1 à 2 % en poids.

4. Utilisation selon la revendication 2 ou 3, **caractérisée en ce qu'**on combine le fluxage par des polymères avec un fluxage préalable par des tensioactifs, lors duquel on injecte d'abord une formulation aqueuse tensioactive dans la formation pétrolifère.

5. Utilisation selon la revendication 4, **caractérisée en ce qu'**il s'agit, pour les tensioactifs pour le fluxage par des tensioactifs, d'au moins un tensioactif choisi dans le groupe des tensioactifs présentant des groupes sulfate, des groupes sulfonate, des groupes polyoxyalkylène, des groupes polyoxyalkylène modifiés de manière anionique, des groupes bétaïne, des groupes glucoside ou des groupes oxyde d'amine.

6. Utilisation selon la revendication 4, **caractérisée en ce qu'**il s'agit, pour les tensioactifs pour le fluxage par des tensioactifs, de tensioactifs anioniques et/ou de type bétaïne.

7. Utilisation selon l'une quelconque des revendications 1 à 6, **caractérisée en ce qu'**il s'agit, pour le monomère (b1) neutre, d'un monomère choisi dans le groupe formé par le (méth)acrylamide, le N-méthyl(méth)acrylamide, le N,N'-diméthyl(méth)acrylamide, le N-méthylol(méth)acrylamide ou la N-vinyl-2-pyrrolidone et, pour le monomère (b2), d'au moins un monomère choisi dans le groupe formé par l'acide (méth)acrylique, l'acide vinylsulfonique, l'acide allylsulfonique, l'acide 2-acrylamido-2-méthylpropanesulfonique (AMPS), l'acide 2-méthacrylamido-2-méthylpropanesulfonique, l'acide 2-acrylamidobutanesulfonique, l'acide 3-acrylamido-3-méthylbutanesulfonique ou l'acide 2-acrylamido-2,4,4-triméthylpentanesulfonique ou l'acide vinylphosphonique.

8. Utilisation selon la revendication 7, **caractérisée en ce qu'**il s'agit, pour le monomère (b1), d'acrylamide et, pour le monomère (b2), d'acide 2-acrylamido-2-méthylpropanesulfonique (AMPS).

9. Utilisation selon l'une quelconque des revendications 1 à 7, **caractérisée en ce que** le copolymère comprend en outre encore au moins un monomère (b3) cationique, présentant des groupes ammonium.

10. Utilisation selon la revendication 9, **caractérisée en ce qu'**il s'agit, pour le monomère cationique (b3), de sels de 3-triméthylammoniumpropyl(méth)acrylamides et de (méth)acrylates de 2-triméthylammoniuméthyle.

11. Utilisation selon l'une quelconque des revendications 1 à 10, **caractérisée en ce que** la quantité de monomères (a) est de 0,1 à 5% en poids par rapport à la quantité de tous les monomères dans le copolymère.

12. Utilisation selon l'une quelconque des revendications 1 à 11, **caractérisée en ce que** les monomères neutres (b1) sont utilisés en une quantité de 30 à 90% en poids et les monomères anioniques (b2) sont utilisés en une quantité de 20 à 69,9% en poids.
